# EUROPEAN PATENT APPLICATION

(11) **EP 4 166 004 A1**
(43) Date of publication of application: **19.04.2023**
(21) Application number: 21382931.0
(22) Date of filing: 15.10.2021
(51) Int. Cl.: A23L 2/06, A23L 27/10, A23L 27/12, A23L 2/56

(54) **COMPOSITION DERIVED FROM CITRUS FRUIT AND BEVERAGE CONTAINING THE SAME**

(71) Applicant: Suntory Holdings Limited, Osaka 530-8203 (JP)
(72) Inventor: MURAZUMI, Koki, 46740 Carcaixent, Valencia (ES); HASHIMOTO, Takuya, 08490 Tordera (ES); OHIRA, Mikako, Kanagawa 211-0067 (JP)
(74) Representative: Herrero & Asociados, S.L.

(57) **Abstract**

The present invention provides a composition for food or beverage derived from a citrus fruit, wherein an amount of pectin in the composition is less than 1 g/100g and an amount of limonene in the composition is less than 4 mg/100g.

## Description

### Field of the Invention

The present invention relates to compositions derived from citrus fruits and beverages containing the compositions and the like. The present invention also relates to methods for the production of such compositions, beverages and the like.

### Background

Citrus fruit is a popular ingredient and flavoring in beverages including, for example, juices and juice-based beverages, carbonated beverages, flavored waters, and the like. In recent years, consumers have become more and more health-conscious, and look for low-calorie and natural beverages using ingredients derived from fresh fruits, such as citrus fruits, rather than artificial ingredients.

For example, peel of citrus fruits, especially outer peel called flavedo, contains a lot of functional components and use of peel in addition to or instead of edible parts of fruits for foods and beverages has been investigated. Japanese Unexamined Patent Application Publication No. JP 2016-093111 (Patent Literature 1) discloses a method for producing a processed citrus peel in a semifluid form, which is to be added to foods or beverages. Japanese Unexamined Patent Application Publication No. JP 2018-102214 (Patent Literature 2) discloses a method for producing a fruit peel extract from peel of a citrus fruit and discloses that the extract is to be added to foods or beverages.

### Citation List

### Patent Literatures

Patent Literature 1: Japanese Unexamined Patent Application Publication No. JP 2016-093111 Patent Literature 2: Japanese Unexamined Patent Application Publication No. JP 2018-102214

### Summary of the Invention

Under the above situation, it would be desirable to provide a novel composition for a food or beverage derived from a citrus fruit which can be used as an ingredient for a food or beverage and a novel food or beverage containing the composition.

The present inventors have discovered that a novel composition for a food or beverage can be produced by using albedo of a citrus fruit. The novel composition can be utilized in an improved beverage.

In one aspect, the present invention provides composition for a food or beverage derived from a citrus fruit, wherein an amount of pectin in the composition is less than 1 g/100g and an amount of limonene in the composition is less than 4 mg/100g. In another aspect, the present invention provides a food or beverage comprising a composition for food or beverage derived from a citrus fruit, wherein an amount of pectin in the beverage is less than 0.5 g/100g and an amount of limonene in the beverage is less than 2 mg/100g. In another aspect, the present invention provides a method of producing a composition for food or beverage derived from a citrus fruit, comprising: separating albedo from the citrus fruit; extracting the albedo with a solvent to obtain an albedo extract; and adding pectinase to the albedo extract. In another aspect, the present invention provides a method of producing a beverage comprising a composition for a food or beverage derived from a citrus fruit.

The present invention embraces the following embodiments:
[1] A composition for a food or beverage derived from a citrus fruit, wherein an amount of pectin in the composition is less than 1 g/100g and an amount of limonene in the composition is less than 4 mg/100g.
[2] The composition according to [1], wherein the composition comprises one or more furanolactones selected from the group consisting of limonin 17-β-D-glucoside, limonin and nomilin, and the total content of the one or more furanolactones is 95,000 ppb or more.
[3] The composition according to [2], wherein a ratio of a content of nomilin to the total content of the one or more furanolactones is 17 wt% or less.
[4] The composition according to any one of [1] to [3], wherein the composition comprises one or more flavonoids selected from the group consisting of sinensetin, hesperetin, hesperidin, diosmin, isorhoifolin, heptamethoxyflavone and narirutin, and the total content of the one or more flavonoids is 63,000 ppb or more.
[5] The composition according to any one of [1] to [4], wherein the composition comprises galacturonic acid in an amount of 0.02 g/100g or more.
[6] The composition according to any one of [1] to [5], wherein the composition comprises, or consists essentially of, an extract of albedo of a citrus fruit or a pectinase-treated extract of albedo of a citrus fruit.
[7] A beverage comprising a composition for food or beverage derived from a citrus fruit, wherein an amount of pectin in the beverage is less than 0.5 g/100g and an amount of limonene in the beverage is less than 2 mg/100g.
[8] The beverage according to [7], wherein the beverage comprises one or more furanolactones selected from the group consisting of limonin 17-β-D-glucoside, limonin and nomilin, and the total content of the one or more furanolactones is 10 ppb or more.
[9] The beverage according to [8], wherein a ratio of a content of nomilin to the total content of the one or more furanolactones is 17 wt% or less.
[10] The beverage according to any one of [7] to [9], wherein the beverage comprises one or more flavonoids selected from the group consisting of sinensetin, hesperetin, hesperidin, diosmin, isorhoifolin, heptamethoxyflavone and narirutin, and the total content of the one or more flavonoids is 10 ppb or more.
[11] The beverage according to any one of [7] to [10], wherein the beverage comprises galacturonic acid in an amount of 0.004 mg/100g or more.
[12] The beverage according to any one of [7] to [11], wherein the composition comprises, or consists essentially of, an extract of albedo of a citrus fruit or a pectinase-treated extract of albedo of a citrus fruit.
[13] The beverage according to any one of [7] to [11], wherein a ratio of an amount of limonene to a total amount of one or more furanolactones selected from the group consisting of limonin 17-β-D-glucoside, limonin and nomilin in the beverage is 0.2 or less, or a ratio of an amount of limonene to a total amount of one or more flavonoids selected from the group consisting of sinensetin, hesperetin, hesperidin, diosmin, isorhoifolin, heptamethoxyflavone and narirutin in the beverage is 0.3 or less.
[14] A method of producing a composition for food or beverage derived from a citrus fruit, comprising:
   separating albedo from the citrus fruit;
   extracting the albedo with a solvent to obtain an albedo extract; and
   adding pectinase to the albedo extract.
[15] The method according to [14], further comprising processing the albedo extract at 30 to 60 °C for 0.5 to 24 hours after the addition of pectinase to the albedo extract.

In one embodiment, the present invention can provide a novel composition for a food or beverage derived from a citrus fruit which can be used as an ingredient for a food or beverage and a novel food or beverage containing the composition. A preferred embodiment can provide a novel composition for a food or beverage capable of imparting natural and fresh fruity flavor of a citrus fruit to a food or beverage. A more preferred embodiment can provide a novel composition for a food or beverage derived from a citrus capable of imparting natural bitterness derived from a peel of a citrus fruit in addition to the natural and fresh fruity flavor. A composition for a food and beverage or a beverage containing the same according to an embodiment of the present invention has a high photostability and/or stability in appearance due to a low content of citrus oil, such as limonene, and has a unique appearance with yellowish and nearly transparent color.

### Summary of the Figures

Embodiments and experiments illustrating the principles of the invention will now be discussed with reference to the accompanying figures.

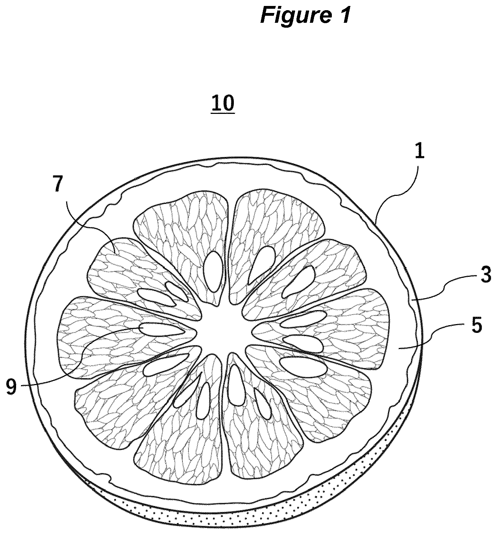

**Figure 1** shows a cross-section view of a typical citrus fruit.

### Description of Embodiments

Aspects and embodiments of the present invention will now be described in detail. It is noted that aspects and embodiments described below are merely illustrative and are not intended to limit the present invention to these embodiments alone. The present invention can be practiced in various forms without departing from the scope thereof. It is noted that all literatures and patent literatures including unexamined patent applications, patent publications and the like cited herein are incorporated herein by reference.

As used herein, the term "ppm" and "ppb" means "ppm by weight" and "ppb by weight", respectively, unless otherwise stated. Also, the unit "%" means "wt%" unless otherwise stated.

### 1. Composition for food or beverage derived from citrus fruit

In the first aspect, the present invention provides the following composition (hereinafter referred to as "the composition of the present invention"): A composition for a food or beverage derived from a citrus fruit, wherein an amount of pectin in the composition is less than 1 g/100g and an amount of limonene in the composition is less than 4 mg/100g.

The term "composition for a food or beverage" herein refers to a composition which can be used for or is suitable for use in a food or a beverage. For example, the composition for a food or beverage may be an ingredient for a food or beverage. In addition the composition is derived from a citrus fruit. Therefore, the composition of the present invention may contain components originated from a citrus fruit, such as flavor components, sugars, vitamins, minerals, proteins, polysaccharides and dietary fibers. In some embodiments, the composition of the present invention is capable of imparting natural and fresh fruity flavor of a citrus fruit to a food or beverage due to the presence of components originated from a citrus fruit. In preferred embodiments, in addition to the natural and fresh fruity flavor, natural bitterness derived from a peel of a citrus fruit is imparted. Although a citrus fruit is generally abundant in pectin and the composition of the present invention is derived from a citrus fruit, an amount of pectin in the composition is as low as less than 1 g/100g. Also, despite the abundance of limonene in a citrus fruit in general, an amount of limonene in the composition is as low as less than 4 mg/100g. In some embodiments, the composition of the present invention has high photostability and/or stability in appearance due to a low content of citrus oil, such as limonene, and has a unique appearance with yellowish and nearly transparent color.

An example of the composition for a food or beverage according to the present invention includes an extract (liquid or solid) and a concentrate of extract.

An amount of pectin in the composition of the present invention is less than 1 g/100g. In some embodiments, the amount of pectin in the composition of the present invention may be 0 g/100g or less than its detection limit. In some embodiments, the amount of pectin in the composition of the present invention is 0.95 g/100g or less, 0.9 g/100g or less, 0.8 g/100g or less, 0.7 g/100g or less, 0.6 g/100g or less, 0.5 g/100g or less, 0.4 g/100g or less, 0.3 g/100g or less, 0.2 g/100g or less, 0.1 g/100g or less, more than 0 g/100g and less than 1 g/100g, 0.01g/100g to 0.95 g/100g, 0.01g/100g to 0.9 g/100g, 0.01g/100g to 0.8 g/100g, 0.01g/100g to 0.7 g/100g, 0.01g/100g to 0.6 g/100g, 0.01g/100g to 0.5 g/100g, 0.01g/100g to 0.4 g/100g, 0.01g/100g to 0.3 g/100g, 0.01g/100g to 0.2 g/100g, 0.01g/100g to 0.15 g/100g, 0.05g/100g to 0.95 g/100g, 0.05g/100g to 0.9 g/100g, 0.05g/100g to 0.8 g/100g, 0.05g/100g to 0.7 g/100g, 0.05g/100g to 0.6 g/100g, 0.05g/100g to 0.5 g/100g, 0.05g/100g to 0.4 g/100g, 0.05g/100g to 0.3 g/100g, 0.05g/100g to 0.2 g/100g or 0.05g/100g to 0.15 g/100g. The amount of pectin in the composition may be preferably 0.01g/100g to 0.7 g/100g, more preferably 0.01g/100g to 0.2 g/100g, yet more preferably 0.01g/100g to 0.15 g/100g. The amount of pectin can be analyzed by measuring the amount of galacturonic acid using m-hydroxydiphenyl method (colorimetric method), for example, as described in Example section. In some embodiments, the amount of pectin is a total amount of one or more insoluble pectins and one or more soluble pectins contained in the composition. As used herein, soluble pectins mean pectins which can dissolve in hot water, and insoluble pectins mean pectins which can dissolve in a diluted hydrochloric acid, such as 0.05 mol/L hydrochloric acid. The amount of pectin can be reduced to the above-described amount by enzymatically treating the compound with a pectinase.

In other embodiments, the amount of pectin is a total amount of one or more soluble pectins contained in the composition. In some embodiments, the amount of a total amount of one or more soluble pectins in the composition of the present invention is 0.95 g/100g or less, 0.9 g/100g or less, 0.8 g/100g or less, 0.7 g/100g or less, 0.6 g/100g or less, 0.5 g/100g or less, 0.4 g/100g or less, 0.3 g/100g or less, 0.2 g/100g or less, 0.1 g/100g or less, more than 0 g/100g and less than 1 g/100g, 0.01g/100g to 0.95 g/100g, 0.01g/100g to 0.9 g/100g, 0.01g/100g to 0.8 g/100g, 0.01g/100g to 0.7 g/100g, 0.01g/100g to 0.6 g/100g, 0.01g/100g to 0.5 g/100g, 0.01g/100g to 0.4 g/100g, 0.01g/100g to 0.3 g/100g, 0.01g/100g to 0.2 g/100g, 0.01g/100g to 0.15 g/100g, 0.05g/100g to 0.95 g/100g, 0.05g/100g to 0.9 g/100g, 0.05g/100g to 0.8 g/100g, 0.05g/100g to 0.7 g/100g, 0.05g/100g to 0.6 g/100g, 0.05g/100g to 0.5 g/100g, 0.05g/100g to 0.4 g/100g, 0.05g/100g to 0.3 g/100g, 0.05g/100g to 0.2 g/100g or 0.05g/100g to 0.15 g/100g. The amount of a total amount of one or more soluble pectins in the composition may be preferably 0.01g/100g to 0.7 g/100g, more preferably 0.01g/100g to 0.2 g/100g, yet more preferably 0.01g/100g to 0.15 g/100g. The amount of soluble pectins can be analyzed by measuring the amount of galacturonic acid using m-hydroxydiphenyl method (colorimetric method), for example, as described in Example section.

An amount of limonene in the composition of the present invention is less than 4 mg/100g. In some embodiments, the amount of limonene in the composition of the present invention is 0 mg/100g or less than its detection limit. In some embodiments, the amount of limonene in the composition of the present invention is 3.5 mg/100g or less, 3 mg/100g or less, 2.5 mg/100g or less, 2 mg/100g or less, 1.5 mg/100g or less, 1 mg/100g or less, 0.8 mg/100g or less, 0.6 mg/100g or less, 0.4 mg/100g or less, 0.2 mg/100g or less, 0.1 mg/100g or less, 0.05 mg/100g or less, 0.01 mg/100g or less, 0 mg/100g to less than 4 mg/100g, 0.001 mg/100g to less than 4 mg/100g, 0.001 mg/100g to 3.5 mg/100g, 0.001 mg/100g to 3 mg/100g, 0.001 mg/100g to 2.5 mg/100g, 0.001 mg/100g to 2 mg/100g, 0.001 mg/100g to 1.5 mg/100g, 0.001 mg/100g to 1 mg/100g, 0.001 mg/100g to 0.8 mg/100g, 0.001 mg/100g to 0.6 mg/100g, 0.001 mg/100g to 0.4 mg/100g, 0.001 mg/100g to 0.2 mg/100g, 0.001 mg/100g to 0.1 mg/100g, 0.001 mg/100g to 0.08 mg/100g, 0.01 mg/100g to less than 4 mg/100g, 0.01 mg/100g to 3.5 mg/100g, 0.01 mg/100g to 3 mg/100g, 0.01 mg/100g to 2.5 mg/100g, 0.01 mg/100g to 2 mg/100g, 0.01 mg/100g to 1.5 mg/100g, 0.01 mg/100g to 1 mg/100g, 0.01 mg/100g to 0.8 mg/100g, 0.01 mg/100g to 0.6 mg/100g, 0.01 mg/100g to 0.4 mg/100g, 0.01 mg/100g to 0.2 mg/100g, 0.01 mg/100g to 0.1 mg/100g or 0.01 mg/100g to 0.08 mg/100g. The amount of limonene in the composition may be preferably 0.001 mg/100g to 0.2 mg/100g, more preferably 0.001 mg/100g to 0.1 mg/100g and yet more preferably 0.01 mg/100g to 0.08 mg/100g. The amount of limonene can be measured using gas chromatography-mass spectrometry (GC/MS), for example, as described in Example section. Limonene may be d-limonene, I-limonene or mixture thereof. The amount of limonene can be reduced to the above-described amount by mainly using albedo as a raw material for the composition.

The composition of the present invention may comprise one or more furanolactones selected from the group consisting of limonin 17-β-D-glucoside, limonin and nomilin. In some embodiments, the amount of one or more furanolactones selected from the group consisting of limonin 17-β-D-glucoside, limonin and nomilin in the composition of the present invention in total is 95,000 ppb or more, 100,000 ppb or more, 120,000 ppb or more, 130,000 ppb or more, 150,000 ppb or more, 170,000 ppb or more, 95,000 to 300,000 ppb, 100,000 to 300,000 ppb, 120,000 to 300,000 ppb, 130,000 to 300,000 ppb, 150,000 to 300,000 ppb, 170,000 to 300,000 ppb, 95,000 to 250,000 ppb, 100,000 to 250,000 ppb, 120,000 to 250,000 ppb, 130,000 to 250,000 ppb, 150,000 to 250,000 ppb, 170,000 to 250,000 ppb, 95,000 to 200,000 ppb, 100,000 to 200,000 ppb, 120,000 to 200,000 ppb, 130,000 to 200,000 ppb, 150,000 to 200,000 ppb, 170,000 to 200,000 ppb, 95,000 to 140,000 ppb, 100,000to 140,000 ppb, 110,000 to 140,000 ppb or 120,000 to 140,000 ppb. The total content of the one or more furanolactones in the composition of the present invention in total may be preferably 95,000 to 300,000 ppb, more preferably 100,000 to 250,000 ppb, yet more preferably 120,000 to 200,000 ppb. The amount of the furanolactones can be measured using high-performance liquid chromatography (HPLC), for example, as described in Example section. The amount of furanolactones can be adjusted by mainly using albedo as a raw material for the composition.

Ratio of a content of nomilin to the total content of the one or more furanolactones may be 17 wt% or less. In preferred embodiments, the ratio is 15 wt% or less, 12 wt% or less, 10 wt% or less, 8 wt% or less, 5 wt% or less, 3 wt% or less, more than 0 wt% to 18 wt%, 0.1 wt% to 18 wt%, 0.1 wt% to 15 wt%, 0.1 wt% to 12 wt%, 0.1 wt% to 10 wt%, 0.1 wt% to 8 wt%, 0.1 wt% to 5 wt% or 0.1 wt% to 3 wt%, 1 wt% to 10 wt%, 1 wt% to 8 wt% or 1 wt% to 5 wt%. In more preferred embodiments, the ratio is 0.1 wt% to 10 wt% or 1 wt% to 8 wt% or 1 wt% to 5 wt%.

Ratio of an amount of limonene to a total amount of one or more furanolactones selected from the group consisting of limonin 17-β-D-glucoside, limonin and nomilin in the composition of the present invention, i.e., limonene/furanolactones, may be 0.2 or less. This means that the amount of limonene is much lower than the total amount of the furanolactones. In some embodiments, the composition of the present invention contains a low amount of limonene when compared to the total amount of furanolactones. In some embodiments, an amount of limonene to a total amount of one or more furanolactones selected from the group consisting of limonin 17-β-D-glucoside, limonin and nomilin in the composition of the present invention is 0.0001 to 0.2, 0.0001 to 0.15, 0.0001 to 0.1, 0.0001 to 0.08, 0.0001 to 0.06, 0.0001 to 0.04, 0.0001 to 0.02, 0.001 to 0.2, 0.001 to 0.15, 0.001 to 0.1, 0.001 to 0.08, 0.001 to 0.06, 0.001 to 0.04, 0.001 to 0.02, 0.002 to 0.2, 0.002 to 0.15, 0.002 to 0.1, 0.002 to 0.08, 0.002 to 0.06, 0.002 to 0.04 or 0.002 to 0.02. The ratio may be preferably 0.0001 to 0.2, more preferably 0.001 to 0.1, yet more preferably 0.001 to 0.04. Within the above ranges, the composition of the present invention may impart natural and fresh fruity flavor of a citrus fruit to a food or beverage while having a high photostability and/or stability in appearance.

The composition of the present invention may comprise one or more flavonoids selected from the group consisting of sinensetin, hesperetin, hesperidin, diosmin, isorhoifolin, heptamethoxyflavone and narirutin. In some embodiments, the amount of one or more flavonoids selected from the group consisting of sinensetin, hesperetin, hesperidin, diosmin, isorhoifolin, heptamethoxyflavone and narirutin in the composition of the present invention in total is 63,000 ppb or more, 70,000 ppb or more, 80,000 ppb or more, 100,000 ppb or more, 120,000 ppb or more, 140,000 ppb or more, 63,000 to 200,000 ppb, 70,000 to 200,000 ppb, 80,000 to 200,000 ppb, 100,000 to 200,000 ppb, 120,000 to 200,000 ppb, 130,000 to 200,000 ppb, 140,000 to 200,000 ppb, 63,000 to 150,000 ppb, 70,000 to 150,000 ppb, 80,000 to 150,000 ppb, 100,000 to 150,000 ppb, 120,000 to 150,000 ppb, 130,000 to 150,000 ppb, 140,000 to 150,000 ppb, 63,000 to 110,000 ppb, 70,000 to 110,000 ppb or 80,000 to 110,000 ppb. The total content of the one or more flavonoids in the composition of the present invention in total may be preferably 63,000 to 200,000 ppb, more preferably 80,000 to 150,000 ppb, yet more preferably 80,000 to 110,000 ppb. The amount of the flavonoids can be measured using high-performance liquid chromatography (HPLC), for example, as described in Example section. The amount of flavonoids can be adjusted by mainly using albedo as a raw material for the composition.

Ratio of an amount of limonene to a total amount of one or more flavonoids selected from the group consisting of sinensetin, hesperetin, hesperidin, diosmin, isorhoifolin, heptamethoxyflavone and narirutin in the composition of the present invention of the present invention, i.e., limonene/flavonoids, may be 0.3 or less. This means that the amount of limonene is much lower than the total amount of the flavonoids. In some embodiments, the composition of the present invention contains a low amount of limonene when compared to the total amount of flavonoids. In some embodiments, an amount of limonene to a total amount of one or more flavonoids selected from the group consisting of sinensetin, hesperetin, hesperidin, diosmin, isorhoifolin, heptamethoxyflavone and narirutin in the composition of the present invention is 0.0001 to 0.3, 0.0001 to 0.25, 0.0001 to 0.2, 0.0001 to 0.15, 0.0001 to 0.1, 0.0001 to 0.08, 0.0001 to 0.06, 0.0001 to 0.04, 0.0001 to 0.02, 0.001 to 0.3, 0.001 to 0.25, 0.001 to 0.2, 0.001 to 0.15, 0.001 to 0.1, 0.001 to 0.08, 0.001 to 0.06, 0.001 to 0.04, 0.001 to 0.02, 0.002 to 0.3, 0.002 to 0.25, 0.002 to 0.2, 0.002 to 0.15, 0.002 to 0.1, 0.002 to 0.08, 0.002 to 0.06, 0.002 to 0.04 or 0.002 to 0.02. The ratio may be preferably 0.0001 to 0.3, more preferably 0.001 to 0.1, yet more preferably 0.001 to 0.04. Within the above ranges, the composition of the present invention may impart natural and fresh fruity flavor of a citrus fruit to a food or beverage while having a high photostability and/or stability in appearance.

The composition of the present invention may comprise galacturonic acid in an amount of 0.02 g/100g or more. In some embodiments, the amount of galacturonic acid in the composition of the present invention is 0.04 g/100g or more, 0.06 g/100g or more, 0.08 g/100g or more, 0.1 g/100g or more, 0.15 g/100g or more, 0.2 g/100g or more, 0.25 g/100g or more, 0.3 g/100g or more, 0.02 to 10 g/100g, 0.02 to 5 g/100g, 0.02 to 2 g/100g, 0.02 to 1 g/100g, 0.02 to 0.7 g/100g, 0.02 to 0.5 g/100g, 0.1 to 10 g/100g, 0.1 to 5 g/100g, 0.1 to 2 g/100g, 0.1 to 1 g/100g, 0.1 to 0.7 g/100g, 0.1 to 0.5 g/100g, 0.2 to 10 g/100g, 0.2 to 5 g/100g, 0.2 to 2 g/100g, 0.2 to 1 g/100g, 0.2 to 0.7 g/100g or 0.2 to 0.5 g/100g. The content of galacturonic acid in the composition of the present invention may be preferably 0.02 to 2 g/100g, more preferably 0.1 to 1 g/100g, yet more preferably 0.2 to 0.7 g/100g. The amount of galacturonic acid can be measured using high-performance liquid chromatography (HPLC), for example, as described in Example section. The amount of galacturonic acid can be adjusted by enzymatically treating the compound with a pectinase. Galacturonic acid can be generated by the hydrolysis of pectins.

In some embodiments, the composition comprises, or consists essentially of, an extract of albedo of a citrus fruit or a pectinase-treated extract of albedo of a citrus fruit. As illustrated in Figure 1, albedo is a whitish and spongy part of peel of a citrus fruit. The "pectinase-treated extract of albedo of a citrus fruit" herein means an extract of albedo of a citrus fruit which has been treated with a pectinase to reduce the amount of pectin in the extract. The phrase "consists essentially of" herein means that the composition of the present invention may contain an extract of a part other than albedo of a citrus fruit within a range that does not impair the effect of the invention. For example, 70% or more, 80% or more, preferably 90% or more, more preferably 95% or more and still more preferably 98% or more of the composition is an extract of albedo of a citrus fruit or a pectinase-treated extract of albedo of a citrus fruit. The balance may be juice of a citrus fruit or an extract from flavedo of a citrus fruit. As described in Figure 1, a citrus fruit (10) is generally composed of segments with juice vesicles (7), seeds (9) and peel (1), which is composed of albedo (5) and flavedo (3). Generally, flavedo is a preferred part in a citrus fruit peel because it contains a high amount of citrus oil, such as limonene, which can be used for a flavoring. The present inventors have surprisingly found that a composition obtained mainly from albedo, not from flavedo, of a citrus fruit can impart natural and fresh fruity flavor of a citrus fruit to a food or beverage.

As long as the composition of the present invention contains the above-described amount of pectin and limonene, the method of producing the composition of the present invention is not limited. In some embodiments, the composition of the present invention is prepared by adding the components as described above into water. In some embodiments, the composition of the present invention is prepared by using some parts of a citrus fruit and adjusting the amount of the components as described above. In preferred embodiments, the composition of the present invention is produced by the method disclosed in herein.

The composition of the present invention may be a solid state, a liquid state or a semisolid state, such as gel or sol. In preferred embodiments, the composition is in a liquid form, such as a liquid extract of a citrus fruit. In some embodiments, the composition of the present invention comprises a solvent. The solvent may be water, alcohol or a mixture of water and alcohol.

The composition of the present invention may be derived from one or more citrus fruits selected from the group consisting of lemon, orange, mandarin, grapefruit, lime and other citrus fruits. Other citrus fruits may include, without limitation, kumquat, yuzu, ugli fruit, pomelo, tangerine, tangelo, satsuma, and clementine. In some embodiments, the citrus fruit is selected from lemon, orange, mandarin, grapefruit, and lime. In some embodiments, the citrus fruit is selected from lemon and orange. In some embodiments, the citrus fruit is lemon. In preferred embodiments, the composition of the present invention is derived from one or more citrus fruits selected from the group consisting of lemon, orange and grapefruit.

Examples of the food for which the composition of the present invention can be used include, but not particularly limited to, a confection, a bread, cereal flour, noodles, rice, a processed agricultural/forestry food, a processed livestock product, a processed fishery product, a milk/dairy product, an oil-and-fat/processed oil-and-fat product, seasoning or other food materials.

Examples of the beverage for which the composition of the present invention can be used include, but not particularly limited to, a carbonated beverage, a non-carbonated beverage, an alcoholic beverage, a non-alcoholic beverage, a beer-taste beverage such as beer or non-alcohol beer, a coffee beverage, a tea beverage, a cocoa beverage, a nutritious beverage and a functional beverage. In preferred embodiments, the composition of the present invention is used for a carbonated beverage, as the flavor of the composition of the present invention may particularly suit to a carbonated beverage.

### 2. Food or beverage comprising composition for food or beverage derived from a citrus fruit

In the second aspect, the present invention provides the following food or beverage (hereinafter referred to as "the food or beverage of the present invention"):
A food or beverage comprising a composition for food or beverage derived from a citrus fruit, wherein an amount of pectin in the beverage is less than 0.5 g/100g and an amount of limonene in the beverage is less than 2 mg/100g.

An amount of pectin in the food or beverage of the present invention is less than 0.5 g/100g. In some embodiments, the amount of pectin in the food or beverage of the present invention may be 0 g/100g or less than its detection limit. In some embodiments, the amount of pectin in the food or beverage of the present invention is 0.45 g/100g or less, 0.4 g/100g or less, 0.3 g/100g or less, 0.2 g/100g or less, 0.1 g/100g or less, 0.01 g/100g or less, 0.001 g/100g or less, 0.0001 g/100g or less, 0.000001 g/100g to less than 0.5 g/100g, 0.000001 g/100g to 0.4 g/100g, 0.000001 g/100g to 0.3 g/100g, 0.000001 g/100g to 0.2 g/100g, 0.000001 g/100g to 0.1 g/100g, 0.000001 g/100g to 0.01 g/100g, 0.000001 g/100g to 0.001 g/100g, 0.000001 g/100g to 0.0001 g/100g, 0.00001 g/100g to less than 0.5 g/100g, 0.00001 g/100g to 0.4 g/100g, 0.00001 g/100g to 0.3 g/100g, 0.00001 g/100g to 0.2 g/100g, 0.00001 g/100g to 0.1 g/100g, 0.00001 g/100g to 0.01 g/100g, 0.00001 g/100g to 0.001 g/100g or 0.0001 g/100g to 0.0002 g/100g. In some embodiments, the amount of pectin in the food or beverage of the present invention is 0.00001 to 0.2 g/100g, 0.00001 to 0.15 g/100g, 0.00001 to 0.05 g/100g, 0.00001 to 0.02 g/100g, 0.00001 to 0.005 g/100g, 0.00001 to 0.002 g/100g, 0.00001 to 0.0005 g/100g, 0.00001 to 0.0002 g/100g, 0.0001 to 0.2 g/100g, 0.0001 to 0.15 g/100g, 0.0001 to 0.05 g/100g, 0.0001 to 0.02 g/100g, 0.0001 to 0.005 g/100g, 0.0001 to 0.002 g/100g, 0.0001 to 0.0005 g/100g, 0.0001 to 0.0002 g/100g, 0.001 to 0.2 g/100g, 0.001 to 0.15 g/100g, 0.001 to 0.05 g/100g, 0.001 to 0.02 g/100g, 0.001 to 0.005 g/100g, 0.001 to 0.002 g/100g, 0.01 to 0.2 g/100g, 0.01 to 0.15 g/100g, 0.01 to 0.05 g/100g or 0.01 to 0.02 g/100g. In preferred embodiments, the amount of pectin in the food or beverage of the present invention is 0.00001 to 0.2 g/100g, 0.00001 to 0.1 g/100g or 0.00001 to 0.02 g/100g. The amount of pectin can be analyzed by measuring the amount of galacturonic acid using m-hydroxydiphenyl method (colorimetric method), for example, as described in Example section. If the amount of pectin in a beverage is below the detection limit of m-hydroxydiphenyl method (colorimetric method), a sample can be concentrated by a known method, such as vacuum evaporation and solid phase extraction, and measure the amount in the concentrated sample to calculate the amount of pectin in the beverage. In some embodiments, the amount of pectin is a total amount of one or more insoluble pectins and one or more soluble pectins contained in the food or beverage. The amount of pectin can be reduced to the above-described amount by enzymatically treating a raw material containing pectin with a pectinase.

In other embodiments, the amount of pectin is a total amount of one or more soluble pectins contained in the food or beverage. In some embodiments, the amount of a total amount of one or more soluble pectins in the food or beverage of the present invention is 0.5 g/100g or less, 0.45 g/100g or less, 0.4 g/100g or less, 0.3 g/100g or less, 0.2 g/100g or less, 0.1 g/100g or less, 0.01 g/100g or less, 0.001 g/100g or less, 0.0001 g/100g or less, 0.000001 g/100g to less than 0.5 g/100g, 0.000001 g/100g to 0.4 g/100g, 0.000001 g/100g to 0.3 g/100g, 0.000001 g/100g to 0.2 g/100g, 0.000001 g/100g to 0.1 g/100g, 0.000001 g/100g to 0.01 g/100g, 0.000001 g/100g to 0.001 g/100g, 0.000001 g/100g to 0.0001 g/100g, 0.00001 g/100g to less than 0.5 g/100g, 0.00001 g/100g to 0.4 g/100g, 0.00001 g/100g to 0.3 g/100g, 0.00001 g/100g to 0.2 g/100g, 0.00001 g/100g to 0.1 g/100g, 0.00001 g/100g to 0.01 g/100g, 0.00001 g/100g to 0.001 g/100g, 0.0001g/100g to 0.0002 g/100g. In some embodiments, the amount of soluble pectin in the food or beverage of the present invention is 0.00001 to 0.2 g/100g, 0.00001 to 0.15 g/100g, 0.00001 to 0.05 g/100g, 0.00001 to 0.02 g/100g, 0.00001 to 0.005 g/100g, 0.00001 to 0.002 g/100g, 0.00001 to 0.0005 g/100g, 0.00001 to 0.0002 g/100g, 0.0001 to 0.2 g/100g, 0.0001 to 0.15 g/100g, 0.0001 to 0.05 g/100g, 0.0001 to 0.02 g/100g, 0.0001 to 0.005 g/100g, 0.0001 to 0.002 g/100g, 0.0001 to 0.0005 g/100g, 0.0001 to 0.0002 g/100g, 0.001 to 0.2 g/100g, 0.001 to 0.15 g/100g, 0.001 to 0.05 g/100g, 0.001 to 0.02 g/100g, 0.001 to 0.005 g/100g, 0.001 to 0.002 g/100g, 0.01 to 0.2 g/100g, 0.01 to 0.15 g/100g, 0.01 to 0.05 g/100g or 0.01 to 0.02 g/100g. In preferred embodiments, the amount of soluble pectin in the food or beverage of the present invention is 0.00001 to 0.2 g/100g, 0.00001 to 0.1 g/100g or 0.00001 to 0.02 g/100g. The amount of soluble pectins can be analyzed by measuring the amount of galacturonic acid using m-hydroxydiphenyl method (colorimetric method), for example, as described in Example section.

An amount of limonene in the food or beverage of the present invention is less than 2 mg/100g. In some embodiments, the amount of limonene in the food or beverage of the present invention is 0 mg/100g or less than its detection limit. In some embodiments, the amount of limonene in the food or beverage of the present invention is 1.5 mg/100g or less, 1 mg/100g or less, 0.5 mg/100g or less, 0.1 mg/100g or less, 0.01 mg/100g or less, 0.001 mg/100g or less, 0.0005 mg/100g or less, 0.00005 mg/100g or less, 0.000001 mg/100g to less than 0.5 mg/100g, 0.000001 mg/100g to 0.4 mg/100g, 0.000001 mg/100g to 0.3 mg/100g, 0.000001 mg/100g to 0.2 mg/100g, 0.000001 mg/100g to 0.1 mg/100g, 0.000001 mg/100g to 0.01 mg/100g, 0.000001 mg/100g to 0.001 mg/100g, 0.000001mg/100g to 0.0001 mg/100g, 0.00001 mg/100g to less than 0.5 mg/100g, 0.00001 mg/100g to 0.4 mg/100g, 0.00001 mg/100g to 0.3 mg/100g, 0.00001 mg/100g to 0.2 mg/100g, 0.00001 mg/100g to 0.1 mg/100g, 0.00001 mg/100g to 0.01 mg/100g, 0.00001 mg/100g to 0.001 mg/100g, 0.0001mg/100g to 0.0002 mg/100g. In some embodiments, the amount of limonene in the food or beverage of the present invention is 0.00001 to 0.2 mg/100g, 0.00001 to 0.15 mg/100g, 0.00001 to 0.05 mg/100g, 0.00001 to 0.02 mg/100g, 0.00001 to 0.005 mg/100g, 0.00001 to 0.002 mg/100g, 0.00001 to 0.0005 mg/100g, 0.00001 to 0.0002 mg/100g, 0.0001 to 0.2 mg/100g, 0.0001 to 0.15 mg/100g, 0.0001 to 0.05 mg/100g, 0.0001 to 0.02 mg/100g, 0.0001 to 0.005 mg/100g, 0.0001 to 0.002 mg/100g, 0.0001 to 0.0005 mg/100g, 0.0001 to 0.0002 mg/100g, 0.001 to 0.2 mg/100g, 0.001 to 0.15 mg/100g, 0.001 to 0.05 mg/100g, 0.001 to 0.02 mg/100g, 0.001 to 0.005 mg/100g, 0.001 to 0.002 mg/100g, 0.005 to 0.2 mg/100g, 0.005 to 0.15 mg/100g, 0.005 to 0.05 mg/100g or 0.005 to 0.04 mg/100g. In preferred embodiments, the amount of limonene in the food or beverage of the present invention is 0.00001 to 0.2 mg/100g, 0.00001 to 0.1 mg/100g or 0.00001 to 0.02 mg/100g. The amount of limonene can be measured using gas chromatography-mass spectrometry (GC/MS), for example, as described in Example section. If the amount of limonene in a beverage is below the detection limit of GC/MS, a sample can be concentrated by a known method, such as vacuum evaporation and solid phase extraction, and measure the amount in the concentrated sample to calculate the amount of limonene in the beverage. Limonene may be d-limonene, I-limonene or mixture thereof. The amount of limonene can be reduced to the above-described amount by mainly using albedo as a raw material for the food or beverage.

The food or beverage of the present invention may comprise one or more furanolactones selected from the group consisting of limonin 17-β-D-glucoside, limonin and nomilin. In some embodiments, the amount of one or more furanolactones selected from the group consisting of limonin 17-β-D-glucoside, limonin and nomilin in the food or beverage of the present invention in total is 10 ppb or more, 15 ppb or more, 20 ppb or more, 50 ppb or more, 100 ppb or more, 500 ppb or more, 1,000 ppb or more, 5,000 ppb or more, 10,000 ppb or more, 20,000 ppb or more, 47,500 ppb or more, 10 ppb to 150,000 ppb, 15 ppb to 150,000 ppb, 20 ppb to 150,000 ppb, 50 ppb to 150,000 ppb, 100 ppb to 150,000 ppb, 500 ppb to 150,000 ppb, 1,000 ppb to 150,000 ppb, 5,000 ppb to 150,000 ppb, 10,000 ppb to 150,000 ppb, 20,000 ppb to 150,000 ppb, 47,500 ppb to 150,000 ppb, 10 ppb to 100,000 ppb, 15 ppb to 100,000 ppb, 20 ppb to 100,000 ppb, 50 ppb to 100,000 ppb, 100 ppb to 100,000 ppb, 500 ppb to 100,000 ppb, 1,000 ppb to 100,000 ppb, 5,000 ppb to 100,000 ppb, 10,000 ppb to 100,000 ppb, 20,000 ppb to 100,000 ppb, 47,500 ppb to 100,000 ppb, 10 ppb to 50,000 ppb, 15 ppb to 50,000 ppb, 20 ppb to 50,000 ppb, 50 ppb to 50,000 ppb, 100 ppb to 50,000 ppb, 500 ppb to 50,000 ppb, 1,000 ppb to 50,000 ppb, 5,000 ppb to 50,000 ppb, 10,000 ppb to 50,000 ppb, 20,000 ppb to 50,000 ppb, 47,500 ppb to 50,000 ppb, 10 ppb to 10,000 ppb, 15 ppb to 10,000 ppb, 20 ppb to 10,000 ppb, 50 ppb to 10,000 ppb, 100 ppb to 10,000 ppb, 500 ppb to 10,000 ppb, 1,000 ppb to 10,000 ppb, 5,000 ppb to 10,000 ppb, 10 ppb to 5,000 ppb, 15 ppb to 5,000 ppb, 20 ppb to 5,000 ppb, 50 ppb to 5,000 ppb, 100 ppb to 5,000 ppb, 500 ppb to 5,000 ppb, 1,000 ppb to 5,000 ppb, 10 ppb to 1,000 ppb, 15 ppb to 1,000 ppb, 20 ppb to 1,000 ppb, 50 ppb to 1,000 ppb, 100 ppb to 1,000 ppb or 500 ppb to 1,000 ppb. The total content of the one or more furanolactones in the food or beverage of the present invention in total may be preferably 10 ppb to 50,000 ppb, more preferably 20 ppb to 50,000 ppb, yet more preferably 20 ppb to 10,000 ppb. The amount of the furanolactones can be measured using high-performance liquid chromatography (HPLC), for example, as described in Example section. If the amount of furanolactones in a beverage is below the detection limit of HPLC, a sample can be concentrated by a known method, such as vacuum evaporation and solid phase extraction, and measure the amount in the concentrated sample to calculate the amount of furanolactones in the beverage. The amount of furanolactones can be adjusted by mainly using albedo as a raw material for the food or beverage.

Ratio of a content of nomilin to the total content of the one or more furanolactones may be 17 wt% or less. In preferred embodiments, the ratio is 15 wt% or less, 12 wt% or less, 10 wt% or less, 8 wt% or less, 5 wt% or less, 3 wt% or less, more than 0 wt% to 18 wt%, 0.1 wt% to 18 wt%, 0.1 wt% to 15 wt%, 0.1 wt% to 12 wt%, 0.1 wt% to 10 wt%, 0.1 wt% to 8 wt%, 0.1 wt% to 5 wt% or 0.1 wt% to 3 wt%.

Ratio of an amount of limonene to a total amount of one or more furanolactones selected from the group consisting of limonin 17-β-D-glucoside, limonin and nomilin in the food or beverage of the present invention, i.e., limonene/furanolactones, may be 0.2 or less. This means that the amount of limonene is much lower than the total amount of the furanolactones. In some embodiments, the food or beverage of the present invention contains a low amount of limonene when compared to the total amount of furanolactones. In some embodiments, an amount of limonene to a total amount of one or more furanolactones selected from the group consisting of limonin 17-β-D-glucoside, limonin and nomilin in the food or beverage of the present invention is 0.0001 to 0.2, 0.0001 to 0.15, 0.0001 to 0.1, 0.0001 to 0.08, 0.0001 to 0.06, 0.0001 to 0.04, 0.001 to 0.02, 0.001 to 0.2, 0.001 to 0.15, 0.001 to 0.1, 0.001 to 0.08, 0.001 to 0.06, 0.001 to 0.04, 0.001 to 0.02, 0.002 to 0.2, 0.002 to 0.15, 0.002 to 0.1, 0.002 to 0.08, 0.002 to 0.06, 0.002 to 0.04 or 0.002 to 0.02. The ratio may be preferably 0.0001 to 0.2, more preferably 0.001 to 0.1, yet more preferably 0.001 to 0.04. Within the above ranges, the food or beverage of the present invention may have natural and fresh fruity flavor of a citrus fruit while having a high photostability and/or stability in appearance.

The food or beverage of the present invention may comprise one or more flavonoids selected from the group consisting of sinensetin, hesperetin, hesperidin, diosmin, isorhoifolin, heptamethoxyflavone and narirutin. In some embodiments, the amount of one or more flavonoids selected from the group consisting of sinensetin, hesperetin, hesperidin, diosmin, isorhoifolin, heptamethoxyflavone and narirutin in the food or beverage of the present invention in total is 10 ppb or more, 15 ppb or more, 20 ppb or more, 50 ppb or more, 100 ppb or more, 500 ppb or more, 1,000 ppb or more, 5,000 ppb or more, 10,000 ppb or more, 20,000 ppb or more, 30,000 ppb or more, 10 ppb to 100,000 ppb, 15 ppb to 100,000 ppb, 20 ppb to 100,000 ppb, 50 ppb to 100,000 ppb, 100 ppb to 100,000 ppb, 500 ppb to 100,000 ppb, 1,000 ppb to 100,000 ppb, 5,000 ppb to 100,000 ppb, 10,000 ppb to 100,000 ppb, 20,000 ppb to 100,000 ppb, 47,500 ppb to 100,000 ppb, 10 ppb to 50,000 ppb, 15 ppb to 50,000 ppb, 20 ppb to 50,000 ppb, 50 ppb to 50,000 ppb, 100 ppb to 50,000 ppb, 500 ppb to 50,000 ppb, 1,000 ppb to 50,000 ppb, 5,000 ppb to 50,000 ppb, 10,000 ppb to 50,000 ppb, 20,000 ppb to 50,000 ppb, 47,500 ppb to 50,000 ppb, 10 ppb to 10,000 ppb, 15 ppb to 10,000 ppb, 20 ppb to 10,000 ppb, 50 ppb to 10,000 ppb, 100 ppb to 10,000 ppb, 500 ppb to 10,000 ppb, 1,000 ppb to 10,000 ppb, 5,000 ppb to 10,000 ppb, 10 ppb to 5,000 ppb, 15 ppb to 5,000 ppb, 20 ppb to 5,000 ppb, 50 ppb to 5,000 ppb, 100 ppb to 5,000 ppb, 500 ppb to 5,000 ppb, 1,000 ppb to 5,000 ppb, 10 ppb to 1,000 ppb, 15 ppb to 1,000 ppb, 20 ppb to 1,000 ppb, 50 ppb to 1,000 ppb, 100 ppb to 1,000 ppb or 500 ppb to 1,000 ppb. The total content of the one or more flavonoids in the food or beverage of the present invention in total may be preferably 10 ppb to 50,000 ppb, more preferably 15 ppb to 50,000 ppb, yet more preferably 15 ppb to 10,000 ppb. The amount of the flavonoids can be measured using high-performance liquid chromatography (HPLC), for example, as described in Example section. If the amount of flavonoids in a beverage is below the detection limit of HPLC, a sample can be concentrated by a known method, such as vacuum evaporation and solid phase extraction, and measure the amount in the concentrated sample to calculate the amount of flavonoids in the beverage. The amount of flavonoids can be adjusted by mainly using albedo as a raw material for the food or beverage.

Ratio of an amount of limonene to a total amount of one or more flavonoids selected from the group consisting of sinensetin, hesperetin, hesperidin, diosmin, isorhoifolin, heptamethoxyflavone and narirutin in the food or beverage of the present invention, i.e., limonene/flavonoids, may be 0.3 or less. This means that the amount of limonene is much lower than the total amount of the flavonoids. In some embodiments, the food or beverage of the present invention contains a low amount of limonene when compared to the total amount of flavonoids. In some embodiments, an amount of limonene to a total amount of one or more flavonoids selected from the group consisting of sinensetin, hesperetin, hesperidin, diosmin, isorhoifolin, heptamethoxyflavone and narirutin in the food or beverage of the present invention is 0.0001 to 0.3, 0.0001 to 0.25, 0.0001 to 0.2, 0.0001 to 0.15, 0.0001 to 0.1, 0.0001 to 0.08, 0.0001 to 0.06, 0.0001 to 0.04, 0.001 to 0.02, 0.001 to 0.3, 0.001 to 0.25, 0.001 to 0.2, 0.001 to 0.15, 0.001 to 0.1, 0.001 to 0.08, 0.001 to 0.06, 0.001 to 0.04, 0.001 to 0.02, 0.002 to 0.02, 0.002 to 0.3, 0.002 to 0.25, 0.002 to 0.2, 0.002 to 0.15, 0.002 to 0.1, 0.002 to 0.08, 0.002 to 0.06, 0.002 to 0.04 or 0.002 to 0.02. The ratio may be preferably 0.0001 to 0.3, more preferably 0.001 to 0.1, yet more preferably 0.001 to 0.04. Within the above ranges, the food or beverage of the present invention may have natural and fresh fruity flavor of a citrus fruit while having a high photostability and/or stability in appearance.

The food or beverage of the present invention may comprise galacturonic acid in an amount of 0.004 mg/100g or more. In some embodiments, the amount of galacturonic acid in the composition of the present invention is 0.006 mg/100g or more, 0.01 mg/100g or more, 0.05 mg/100g or more, 0.1 mg/100g or more, 0.5 mg/100g or more, 1 mg/100g or more, 5 mg/100g or more, 10 mg/100g or more, 50 mg/100g or more, 100 mg/100g or more, 0.004 mg/100g to 5,000 mg/100g, 0.006 mg/100g to 5,000 mg/100g, 0.01 mg/100g to 5,000 mg/100g, 0.05 mg/100g to 5,000 mg/100g, 0.1 mg/100g to 5,000 mg/100g, 0.5 mg/100g to 5,000 mg/100g, 1 mg/100g to 5,000 mg/100g, 5 mg/100g to 5,000 mg/100g, 10 mg/100g to 5,000 mg/100g, 50 mg/100g to 5,000 mg/100g, 10 mg/100g to 5,000 mg/100g, 0.004 mg/100g to 2,500 mg/100g, 0.006 mg/100g to 2,500 mg/100g, 0.01 mg/100g to 2,500 mg/100g, 0.05 mg/100g to 2,500 mg/100g, 0.1 mg/100g to 2,500 mg/100g, 0.5 mg/100g to 2,500 mg/100g, 1 mg/100g to 2,500 mg/100g, 5 mg/100g to 2,500 mg/100g, 10 mg/100g to 2,500 mg/100g, 50 mg/100g to 2,500 mg/100g, 10 mg/100g to 2,500 mg/100g, 0.004 mg/100g to 1,000 mg/100g, 0.006 mg/100g to 1,000 mg/100g, 0.01 mg/100g to 1,000 mg/100g, 0.05 mg/100g to 1,000 mg/100g, 0.1 mg/100g to 1,000 mg/100g, 0.5 mg/100g to 1,000 mg/100g, 1 mg/100g to 1,000 mg/100g, 5 mg/100g to 1,000 mg/100g, 10 mg/100g to 1,000 mg/100g, 50 mg/100g to 1,000 mg/100g, 10 mg/100g to 1,000 mg/100g, 0.004 mg/100g to 500 mg/100g, 0.006 mg/100g to 500 mg/100g, 0.01 mg/100g to 500 mg/100g, 0.05 mg/100g to 500 mg/100g, 0.1 mg/100g to 500 mg/100g, 0.5 mg/100g to 500 mg/100g, 1 mg/100g to 500 mg/100g, 5 mg/100g to 500 mg/100g, 10 mg/100g to 500 mg/100g, 50 mg/100g to 500 mg/100g or 10 mg/100g to 500 mg/100g. The content of galacturonic acid in the composition of the present invention may be preferably 0.004 mg/100g to 5,000 mg/100g, more preferably 0.006 mg/100g to 1,000 mg/100g, yet more preferably 0.004 mg/100g to 500 mg/100g. The amount of galacturonic acid can be measured using high-performance liquid chromatography (HPLC), for example, as described in Example section. If the amount of galacturonic acid in a beverage is below the detection limit of HPLC, a sample can be concentrated by a known method, such as vacuum evaporation and solid phase extraction, and measure the amount in the concentrated sample to calculate the amount of galacturonic acid in the beverage. The amount of galacturonic acid can be adjusted by enzymatically treating the food or beverage with a pectinase.

In some embodiments, the composition comprised in the food or beverage comprises, or consists essentially of, an extract of albedo of a citrus fruit or a pectinase-treated extract of albedo of a citrus fruit. The "pectinase-treated extract of albedo of a citrus fruit" herein means an extract of albedo of a citrus fruit which has been treated with a pectinase to reduce the amount of pectin in the extract. The phrase "consists essentially of" herein means that the composition may contain an extract of a part other than albedo of a citrus fruit within a range that does not impair the effect of the invention. For example, 70% or more, 80% or more, preferably 90% or more, more preferably 95% or more and still more preferably 98% or more of the composition is an extract of albedo of a citrus fruit or a pectinase-treated extract of albedo of a citrus fruit. The balance may be juice of a citrus fruit or an extract from flavedo of a citrus fruit. Generally, flavedo is a preferred part in a citrus peel because it contains a high amount of citrus oil which can be used for a flavoring. The present inventors have surprisingly found that a composition obtained mainly from albedo of a citrus fruit can impart natural and fresh fruity flavor of a citrus fruit to food or beverage. Albedo may be obtained from a whole citrus fruit by removing segments with juice vesicles, seeds and flavedo. In some embodiments, albedo is obtained from a citrus fruit after the juice of the citrus fruit has been squeezed. For example, albedo may be obtained from a pomace of a citrus fruit. Using a pomace as a raw material for the composition of the present invention is preferable in terms of utilizing natural resources and reducing wastes.

The food or beverage of the present invention may comprise the composition of the present invention according to the first embodiment. In some embodiments, the content of the composition in the food or beverage is 0.001 to 50 wt% based on the total weight of a food or beverage. In preferred embodiments, the content of the composition, such as an extract of albedo of a citrus fruit, in a food or beverage is 0.001 to 50 wt%, 0.001 to 40 wt%, 0.001 to 30 wt%, 0.001 to 20 wt%, 0.001 to 10 wt%, 0.001 to 5 wt%, 0.001 to 1 wt%, 0.001 to 0.5 wt%, 0.001 to 0.1 wt%, 0.001 to 0.09 wt%, 0.001 to 0.08 wt%, 0.001 to 0.07 wt%, 0.001 to 0.06 wt%, 0.001 to 0.05 wt%, 0.001 to 0.04 wt%, 0.001 to 0.03 wt% or 0.001 to 0.02 wt%. In more preferred embodiments, the content of an extract of albedo of a citrus fruit in a food or beverage is 0.02 to 0.2 wt%.

The food or beverage of the present invention may comprise a fruit juice from a citrus fruit. As used herein, the term "juice" refers to the liquid obtained by mechanically squeezing a fruit. In some embodiments, the content of a fruit juice from a citrus fruit in the food or beverage is 0.01 to 20 wt%, 0.01 to 5 wt% or 0.01 to 2 wt% in terms of straight fruit juice. Any fruit juice may be used regardless of the production method, in the form of straight fruit juice, concentrated fruit juice, or the like. The concentrated fruit juice can be one prepared by either of a heat concentration method and a freeze concentration method.

The type of fruit juice that can be contained in the food or beverage of the present invention is not particularly limited, and one or two or more types of fruit juice may be used. Preferred examples of fruit juice include, but are not limited to: juices from an orange (including mandarin orange), a lemon, a grapefruit, a lime, a pineapple, a strawberry, a blueberry, a black currant, a cranberry, a guava, a banana, an acerola, a papaya, a passion fruit, a mango, an apple, a grape, a peach, an ume (Japanese plum), a pear, an apricot, a sumomo (prune), a melon, a kiwi fruit, and a Japanese quince.

The food or beverage of the present invention may comprise one or more sweeteners. Examples of such a sweetener include natural sweeteners such as fructose, sugar (sucrose), fructose-glucose syrup, glucose, maltose, high-fructose syrup, sugar alcohol, oligosaccharide, honey, a steviol glycoside, a stevia extract, pressed sugarcane juice (brown sugar syrup), starch syrup, Lo Han Kuo (*Siraitia grosvenorii)* powder, a Lo Han Kuo (*Siraitia grosvenorii)* extract, licorice powder, a licorice extract, *Thaumatococcus daniellii* seed powder, a *Thaumatococcus daniellii* seed extract, and artificial sweeteners such as acesulfame potassium, sucralose, neotame, aspartame and saccharin. Among them, a natural sweetener is preferably used from the aspect of imparting clean taste, easy drinkability, natural flavor and moderately rich taste, where fructose, glucose, maltose, sucrose and sugar are particularly preferably used. Either a single or multiple types of these sweeteners may be used.

In some embodiments, no additional sweetener is added to the food or beverage of the invention. In some embodiments the sweetness of the food or beverage comes entirely from sweeteners derived from the citrus fruit (i.e. natural sugars therefrom). In some embodiments, the beverage of the invention contains additional sweetener in a small amount, for example, in an amount providing a sweetness equivalent to a sucrose content of no more than 10 degrees Brix. In some embodiments, the beverage of the invention contains additional sweetener in an amount providing a sweetness equivalent to a sucrose content of no more than 10 degrees Brix, no more than 4.0 degrees Brix, no more than 3.0 degrees Brix, no more than 2.0 degrees Brix, or no more than 1.0 degrees Brix. In preferred embodiments, the beverage of the invention contains additional sweetener in an amount providing a sweetness equivalent to a sucrose content of 0.1 to 5.0 degrees Brix, 0.1 to 4.0 degrees Brix, 0.1 to 3.0 degrees Brix, 0.1 to 2.0 degrees Brix, 0.1 to 1.0 degrees Brix, 0.5 to 5.0 degrees Brix, 0.5 to 4.0 degrees Brix, 0.5 to 3.0 degrees Brix, 0.5 to 2.0 degrees Brix, or 0.5 to 1.0 degrees Brix.

Examples of the food of the present invention include, but not particularly limited to, a confection, a bread, cereal flour, noodles, rice, a processed agricultural/forestry food, a processed livestock product, a processed fishery product, a milk/dairy product, an oil-and-fat/processed oil-and-fat product, seasoning or other food materials.

Examples of the beverage of the present invention include, but not particularly limited to, a carbonated beverage, a non-carbonated beverage, an alcoholic beverage, a non-alcoholic beverage, a beer-taste beverage such as beer or non-alcohol beer, a coffee beverage, a tea beverage, a cocoa beverage, a nutritious beverage and a functional beverage.

An energy (total energy, calorie) of the beverage of the present invention may be, depending on an embodiment, 0 to 50 Kcal/100 mL, 0 to 45 Kcal/100 mL, 0 to 40 Kcal/100 mL, 0 to 35 Kcal/100 mL, 0 to 30 Kcal/100 mL, 0 to 24 Kcal/100 mL, 0 to 22 Kcal/100 mL, 0 to 20 Kcal/100 mL, 0 to 15 Kcal/100 mL, 0 to 10 Kcal/100 mL, 0 to 5 Kcal/100 mL, 0.1 to 50 Kcal/100 mL, 0.1 to 45 Kcal/100 mL, 0.1 to 40 Kcal/100 mL, 0.1 to 35 Kcal/100 mL, 0.1 to 30 Kcal/100 mL, 0.1 to 24 Kcal/100 mL, 0.1 to 22 Kcal/100 mL, 0.1 to 20 Kcal/100 mL, 0.1 to 15 Kcal/100 mL, 0.1 to 10 Kcal/100 mL, 0.1 to 5 Kcal/100 mL, 1 to 50 Kcal/100 mL, 1 to 45 Kcal/100 mL, 1 to 40 Kcal/100 mL, 1 to 35 Kcal/100 mL, 1 to 30 Kcal/100 mL, 1 to 24 Kcal/100 mL, 1 to 22 Kcal/100 mL, 1 to 20 Kcal/100 mL, 1 to 15 Kcal/100 mL, 1 to 10 Kcal/100 mL, 1 to 5 Kcal/100 mL, 5 to 50 Kcal/100 mL, 5 to 45 Kcal/100 mL, 5 to 40 Kcal/100 mL, 5 to 35 Kcal/100 mL, 5 to 30 Kcal/100 mL, 5 to 24 Kcal/100 mL, 5 to 20 Kcal/100 mL, 5 to 15 Kcal/100 mL, 5 to 10 Kcal/100 mL, 10 to 50 Kcal/100 mL, 10 to 45 Kcal/100 mL, 10 to 40 Kcal/100 mL, 10 to 35 Kcal/100 mL, 10 to 30 Kcal/100 mL, 10 to 24 Kcal/100 mL, 10 to 20 Kcal/100 mL, 10 to 15 Kcal/100 mL, 15 to 50 Kcal/100 mL, 15 to 45 Kcal/100 mL, 15 to 40 Kcal/100 mL, 15 to 35 Kcal/100 mL, 15 to 30 Kcal/100 mL, 15 to 24 Kcal/100 mL, 15 to 20 Kcal/100 mL, 20 to 50 Kcal/100 mL, 20 to 45 Kcal/100 mL, 20 to 40 Kcal/100 mL, 20 to 35 Kcal/100 mL, 20 to 30 Kcal/100 mL, 20 to 24 Kcal/100 mL, 24 to 50 Kcal/100 mL, 24 to 45 Kcal/100 mL, 24 to 40 Kcal/100 mL, 24 to 35 Kcal/100 mL or 24 to 30 Kcal/100 mL.

The pH of the beverage of the present invention is not especially limited, and may be 2.0 to 7.0, 2.5 to 6.5, 3.0 to 6.0, 3.5 to 5.5, 2.0 to 5.0, 2.5 to 5.0, 3.0 to 5.0, 3.5 to 5.0, 2.0 to 4.5, 2.5 to 4.5, 3.0 to 4.5, 3.5 to 4.5, 2.0 to 4.0, 2.5 to 4.0, 3.0 to 4.0 or 3.5 to 4.0. In some embodiments, the pH of the beverage of the present invention is preferably 2.0 to 4.5, more preferably 2.2 to 4.2, and further preferably 2.7 to 4.0. When the pH falls in the above-described range, generation of microorganisms and the like otherwise caused during storage can be restrained, and in addition, a refreshing taste can be provided. The pH of the beverage can be determined by well-known methods, for example by using a pH meter. The acidity of the beverage may result from natural acids derived from the citrus fruit. In addition, in some embodiments, acidity modifiers including, but not limited to, citric acid, is added to adjust the pH of the beverage.

The beverage of the present invention may be heat sterilized and packaged to be prepared as a packaged beverage. Examples of such a package include, but not particularly limited to, a PET bottle, an aluminum can, a steel can, a paper package, a chilled cup and a bottle. In some embodiments, the beverage of the present invention has a high photostability and/or stability in appearance due to a low content of citrus oil, such as limonene, and has a unique appearance with yellowish and nearly transparent color, and thus a transparent package, such as a transparent PET bottle and a transparent glass bottle, is preferable. If heat sterilization is to be performed, the type of heat sterilization is not particularly limited, and heat sterilization may be performed, for example, by employing a common technique such as UHT sterilization, retort sterilization or the like. While the temperature during the heat sterilization process is not particularly limited, it is, for example, 65-130 °C, preferably 85-120 °C for 10-40 minutes. Sterilization, however, can be carried out at an appropriate temperature for a several seconds, for example, 5-30 seconds, without any problem as long as a sterilizing value comparative to that under the above-described conditions can be earned.

The food or beverage of the present invention may suitably contain one or more of additional additives commonly contained in a food or beverage, such as an antioxidant (sodium erythorbate or the like), an emulsifier (sucrose esters of fatty acids, sorbitan esters of fatty acids, polyglycerin esters of fatty acids or the like), an acidulant, and a flavor, as long as the effects of the present invention are not affected.

As long as the food or beverage of the present invention contains the above-described amount of pectin and limonene, the method of producing the food or beverage of the present invention is not limited. In some embodiments, the beverage of the present invention is prepared by adding the components as described above into water. In some embodiments, the food or beverage of the present invention is prepared by using some parts of a citrus fruit and adjusting the amount of the components as described above. In some embodiments, the food or beverage of the present invention is prepared by using the composition of the present invention as described in the section of "1. Composition for food or beverage derived from a citrus fruit". In preferred embodiments, the composition of the present invention is produced by the method disclosed in herein.

### 3. Method of producing composition for food or beverage derived from citrus fruit

In the third aspect, the present invention provides the following method (hereinafter referred to as "the method of producing a composition of the present invention"):
A method of producing a composition for food or beverage derived from a citrus fruit, comprising:
separating albedo from the citrus fruit;
extracting the albedo with a solvent to obtain an albedo extract; and
adding pectinase to the albedo extract.

The method of producing a composition of the present invention produces a composition for a food or beverage derived from a citrus fruit according to some embodiments of the composition of the present invention as described in the section of "1. Composition for food or beverage derived from a citrus fruit".

The method comprises separating albedo from a citrus fruit. The citrus fruit is not limited to, and may be selected from the citrus fruits as described in the section of "1. Composition for food or beverage derived from a citrus fruit". As described in Figure 1, a citrus fruit (10) is generally composed of segments with juice vesicles (7), seeds (9) and peel (1), which is composed of albedo (5) and flavedo (3). In some embodiments, the method uses albedo by separating it from a citrus fruit. As long as albedo can be separated from a citrus fruit, any separation method may be used. For example, a citrus essential oil extractor (for example, Polycitrus, manufactured by Fratelli Indelicato S.r.l.) may be used for separating albedo.

When separating albedo, the albedo may contain a small amount of other components derived from a citrus fruit. For example, a separated albedo may contain a small amount of other components derived from a citrus fruit, such as a seed, a segment with juice vesicles, a juice, a flavedo and combination of one or more of them. In some embodiments, a separated albedo consists essentially of albedo. The phrase "consist essentially of" herein means that the separated albedo may contain a small amount of other components derived from a citrus fruit within a range that does not impair the effect of the invention. In some embodiments, a separated albedo contains, based on the total weight of the separated albedo, 0 to 30 wt%, 0 to 25 wt%, 0 to 20 wt%, 0 to 25 wt%, 0 to 20 wt%, 0 to 15 wt%, 0 to 10 wt%, 1 to 30 wt%, 1 to 25 wt%, 1 to 20 wt%, 1 to 25 wt%, 1 to 20 wt%, 1 to 15 wt%, 1 to 10 wt%, 2 to 10 wt%, 3 to 10 wt%, 4 to 10 wt%, 5 to 10 wt%, 1 to 9 wt%, 1 to 8 wt%, 1 to 7 wt%, 1 to 6 wt% or 1 to 5 wt% of other components derived from a citrus fruit.

The method comprises extracting the albedo with a solvent to obtain an albedo extract. The albedo extract may be in a form of slurry containing an albedo and a solvent. The extraction of albedo may be conducted by a known method using any appropriate solvent. In preferred embodiments, extraction efficiency is improved by subjecting albedo to a physical treatment prior to the extraction. Examples of such a physical treatment include, but are not limited to, cutting, fracturing, grinding, or crushing to make albedo into the form of dice, chop, pulp, powder or the like. In preferred embodiments, the albedo can be physically treated using a mill, millstone, or other milling apparatus. The size of the albedo after the physical treatment is not particularly limited, but for example may be 50 mm or less, 40 mm or less, 30 mm or less, 20 mm or less, 10 mm or less, 5 mm or less, 2 mm or less, 1 mm or less, 0.5 mm or less, 0.1 to 5 mm, 0.1 to 4 mm, 0.1 to 3 mm, 0.1 to 2 mm, 0.1 to 1 mm or 0.3 to 2 mm. In preferred embodiments, the size of the albedo after the physical treatment is 0.1 to 1 mm or 0.3 to 2 mm. The size of the albedo after the physical treatment refers to the average diameter of the pieces of albedo which are produced in the physical treatment. The size of the pieces can be validated after chopping, for example, by using a sieve shaker with different mesh sizes to separate and quantify pieces of known diameter.

Extraction of albedo may be conducted using various solvents. Examples of such a solvent include, but are not limited to, water, alcohol and a mixture of water and alcohol. In some embodiments, the solvent is water. Any type of water may be used as long as it does not adversely affect flavor. Examples thereof include tap water, ion exchanged water, soft water, distilled water, and degassed water obtained by degassing. The amount of solvent is not particularly limited to, but may preferably be an amount sufficient to form a slurry when a crushed albedo in a size of 0.1 to 2 mm or the like and a solvent are mixed. In some embodiments, the amount of albedo based on the total weight of albedo and solvent is 10 to 90 wt%, 20 to 80 wt%, 25 to 70 wt%, 30 to 60 wt% or 30 to 50 wt%. In preferred embodiments, the amount of albedo based on the total weight of albedo and solvent is 30 to 50 wt%. Extraction may be conducted at any appropriate temperature, but may preferably conduced at room temperature.

The method comprises adding pectinase to the albedo extract. Without wishing to be bound by theory, the degradation of pectin in the albedo extract using a pectinase contributes to a unique appearance with yellowish and nearly transparent color of the composition. The amount of a pectinase to be added is not particularly limited. The amount may vary with various treatment conditions, including the titer of the pectinase used, the type of the albedo used, and the degree of crushing. In some embodiments, the amount of a pectinase to be added is, based on the total amount of the albedo and solvent, in the range of 0.001 to 1 wt%, 0.001 to 0.5 wt%, 0.001 to 0.2 wt%, 0.001 to 0.1 wt%, 0.001 to 0.05 wt%, 0.01 to 1 wt%, 0.01 to 0.5 wt%, 0.01 to 0.2 wt%, 0.01 to 0.1 wt%, or 0.01 to 0.05 wt%. In preferred embodiments, the amount of a pectinase to be added is, based on the total amount of the albedo and solvent, 0.01 to 0.05 wt%.

A pectinase used in the method is not particularly limited as long as it can decompose pectin by hydrolysis, and any known pectinase capable of hydrolyzing pectin may be used. A pectinase includes, but is not limited to, pectinesterase, which contributes to a hydrolysis of a methylester bond in pectin, and polygalacturonase and pectin lyase, both of which contribute to a hydrolysis of an alpha-1,4 glycosidic bond between galacturonic acid residues. In preferred embodiments, polygalacturonase and pectin lyase are used as a pectinase. In some embodiments, a commercial pectinase, such as Pectinex^{®} Ultra Mash containing polygalacturonase and pectin lyase, is used for an enzymatic treatment.

After addition of a pectinase to the albedo extract, an enzymatic treatment may be conducted at an appropriate temperature for an appropriate time. In some embodiments, an enzymatic treatment is conducted at a temperature of 30 to 60°C, 35 to 60°C, 40 to 60°C, 45 to 60°C, 50 to 60°C, 30 to 55°C, 35 to 55°C, 40 to 55°C or 45 to 55°C. In some embodiments, an enzymatic treatment is conducted for 0.5 hours or more, 1 hours or more, 1.5 hours or more, 2 hours or more, 4 hours or more, 5 hours or more, 10 hours or more, 12 hours or more, 24 hours or more, 0.5 to 24 hours, 1 to 24 hours, 1.5 to 24 hours, 2 to 24 hours, 4 to 24 hours, 5 to 24 hours, 10 to 24 hours or 12 to 24 hours. In preferred embodiments, an enzymatic treatment is conducted at a temperature of 45 to 55°C for 2 hours.

As long as a pectinase is used in the enzymatic treatment, any other enzymes may also be used in combination, such as xylases, mannanases and cellulases. The amount of other enzymes combined is not particularly limited, and can be adjusted depending on the type of albedo used, and/or the like. For example, such other enzymes may be used, based on the total amount of the albedo and solvent, in an amount of 0.001 to 1 wt%, 0.001 to 0.5 wt%, 0.001 to 0.2 wt%, 0.001 to 0.1 wt%, 0.001 to 0.05 wt%, 0.01 to 1 wt%, 0.01 to 0.5 wt%, 0.01 to 0.2 wt%, 0.01 to 0.1 wt%, or 0.01 to 0.05 wt%.

In preferred embodiments, an enzymatic treatment is conducted under stirring in order to improve efficiency. The type of stirrer used is not particularly limited, and for example, a vertical stirrer, a horizontal stirrer, a magnetic stirrer, a shaker, or the like can be used.

In some embodiments, a solid-liquid separation is performed using any known method without limitation. In preferred embodiments, solid-liquid separation can be performed using a filter press, centrifugation, multistage filtration, or the like. By using a continuous centrifugal separator, large amounts of solid and liquid fractions can be separated in a short time.

The process may further comprise deactivating an enzyme to terminate the enzymatic treatment. Deactivation of an enzyme may be done by heating the reaction solution. In some embodiments, the deactivation of an enzyme can be carried out by heating the reaction solution to 80 °C or more, 85 °C or more, 90 °C or more, or 95 °C or more. Heating time may be 10 seconds or more, 15 seconds or more, 20 seconds or more, 25 seconds or more, 30 seconds or more, 30 seconds or more, 35 seconds or more, 40 seconds or more, 45 seconds or more, 50 seconds or more, 55 seconds or more, 60 seconds or more, 10 to 60 seconds, 10 to 50 seconds, 10 to 40 seconds or 20 to 50 seconds. In some embodiments, deactivation of an enzyme is conducted during a sterilization. In preferred embodiments, the reaction solution is sterilized by heat equivalent to a heat treatment at 93 °C for 30 seconds or more.

In the method of the present invention, the "composition for a food or beverage", "pectin", "limonene", "furanolactones", "flavonoids", "galacturonic acid" and "albedo" are defined as described in the above section for the oral composition and the numerical values described in the above section for the beverages are applicable to the numerical values as they are.

### 4. Method of producing beverage comprising composition for food or beverage derived from citrus fruit

In the fourth aspect, the present invention provides a method of producing a beverage comprising a composition for a food or beverage derived from a citrus fruit (hereinafter referred to as "the method of producing a beverage of the present invention").

The method of producing a beverage of the present invention comprises diluting the composition according to the first aspect or the composition produced by the method according to the third aspect with a drinkable solvent. In some embodiments, the method comprises adding ingredients other than the composition for a food or beverage derived from a citrus fruit before or after the dilution. Further, the method according to some embodiments may further comprise packing and/or sterilizing as described above.

In the method of producing a beverage of the present invention, the "composition for a food or beverage", "pectin", "limonene", "furanolactones", "flavonoids", "galacturonic acid" and "albedo", are defined as described in the above section for the oral composition and the numerical values described in the above section for the beverages are applicable to the numerical values as they are.

While the invention has been described in conjunction with the exemplary embodiments described herein, many equivalent modifications and variations will be apparent to those skilled in the art when given this disclosure. Accordingly, the exemplary embodiments of the invention set forth herein are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise", "contain" and "include", and variations such as "comprises", "comprising", "containing" and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### Additional Exemplary Embodiments

The present invention is also described and demonstrated by way of the following additional exemplary embodiments. These additional exemplary embodiments should not limit the scope and meaning of the invention.

In one embodiment, there is provided a composition for a food or beverage derived from a citrus fruit, wherein an amount of pectin in the composition is 0.01g/100g to 0.7 g/100g, 0.01g/100g to 0.2 g/100g, or 0.01g/100g to 0.15 g/100g and an amount of limonene in the composition is 0.001 mg/100g to 1 mg/100g mg/100g. The amount of limonene in the composition may be preferably 0.001 mg/100g to 0.2 mg/100g, more preferably 0.001 mg/100g to 0.1 mg/100g and yet more preferably 0.01 mg/100g to 0.08 mg/100g.

In one embodiment, there is provided a composition for a food or beverage derived from a citrus fruit, wherein an amount of pectin in the composition is less than 1 g/100g, 0.01g/100g to 0.7 g/100g, 0.01g/100g to 0.5 g/100g, 0.01g/100g to 0.2 g/100g, 0.01g/100g to 0.15 g/100g, 0.01g/100g to 0.1 g/100g or 0.01g/100g to 0.05 g/100g and an amount of limonene in the composition is less than 4 mg/100g, 0.001 mg/100g to 2 mg/100g mg/100g. 0.001 mg/100g to 1 mg/100g, 0.001 mg/100g to 0.5 mg/100g, 0.001 mg/100g to 0.3 mg/100g, 0.001 mg/100g to 0.1 mg/100g or 0.001 mg/100g to 0.08 mg/100g.

In one embodiment, there is provided a composition for a food or beverage derived from a citrus fruit, wherein an amount of pectin in the composition is 0.01g/100g to 0.7 g/100g, 0.01g/100g to 0.2 g/100g, or 0.01g/100g to 0.15 g/100g and an amount of limonene in the composition is 0.001 mg/100g to 1 mg/100g mg/100g, wherein the composition comprises one or more furanolactones selected from the group consisting of limonin 17-β-D-glucoside, limonin and nomilin, and the total content of the one or more furanolactones is 95,000 ppb or more, 100,000 to 250,000 ppb, or 120,000 to 200,000 ppb. Preferably, a ratio of an amount of limonene to a total amount of one or more furanolactones selected from the group consisting of limonin 17-β-D-glucoside, limonin and nomilin in the composition is 0.2 or less, 0.0001 to 0.2, 0.001 to 0.1, or 0.001 to 0.04.

In one embodiment, there is provided a composition for a food or beverage derived from a citrus fruit, wherein an amount of pectin in the composition is less than 1 g/100g, 0.01g/100g to 0.7 g/100g, 0.01g/100g to 0.5 g/100g, 0.01g/100g to 0.2 g/100g, 0.01g/100g to 0.15 g/100g, 0.01g/100g to 0.1 g/100g or 0.01g/100g to 0.05 g/100g and an amount of limonene in the composition is less than 4 mg/100g, 0.001 mg/100g to 2 mg/100g mg/100g. 0.001 mg/100g to 1 mg/100g, 0.001 mg/100g to 0.5 mg/100g, 0.001 mg/100g to 0.3 mg/100g, 0.001 mg/100g to 0.1 mg/100g or 0.001 mg/100g to 0.08 mg/100g, wherein the composition comprises one or more furanolactones selected from the group consisting of limonin 17-β-D-glucoside, limonin and nomilin, and the total content of the one or more furanolactones is 95,000 ppb or more, 100,000 to 250,000 ppb, or 120,000 to 200,000 ppb. Preferably, a ratio of an amount of limonene to a total amount of one or more furanolactones selected from the group consisting of limonin 17-β-D-glucoside, limonin and nomilin in the composition is 0.2 or less, 0.0001 to 0.2, 0.001 to 0.1, or 0.001 to 0.04.

In one embodiment, there is provided a composition for a food or beverage derived from a citrus fruit, wherein an amount of pectin in the composition is 0.01g/100g to 0.7 g/100g, 0.01g/100g to 0.2 g/100g, or 0.01g/100g to 0.15 g/100g and an amount of limonene in the composition is 0.001 mg/100g to 1 mg/100g mg/100g, wherein the composition comprises one or more flavonoids selected from the group consisting of sinensetin, hesperetin, hesperidin, diosmin, isorhoifolin, heptamethoxyflavone and narirutin, and the total content of the one or more flavonoids is 63,000 ppb or more, 70,000 to 200,000 ppb, or 80,000 to 110,000 ppb. Preferably, a ratio of an amount of limonene to a total amount of one or more flavonoids selected from the group consisting of sinensetin, hesperetin, hesperidin, diosmin, isorhoifolin, heptamethoxyflavone and narirutin in the composition is 0.3 or less, 0.0001 to 0.3, 0.001 to 0.1, or 0.001 to 0.04.

In one embodiment, there is provided a composition for a food or beverage derived from a citrus fruit, wherein an amount of pectin in the composition is less than 1 g/100g, 0.01g/100g to 0.7 g/100g, 0.01g/100g to 0.5 g/100g, 0.01g/100g to 0.2 g/100g, 0.01g/100g to 0.15 g/100g, 0.01g/100g to 0.1 g/100g or 0.01g/100g to 0.05 g/100g and an amount of limonene in the composition is less than 4 mg/100g, 0.001 mg/100g to 2 mg/100g mg/100g. 0.001 mg/100g to 1 mg/100g, 0.001 mg/100g to 0.5 mg/100g, 0.001 mg/100g to 0.3 mg/100g, 0.001 mg/100g to 0.1 mg/100g or 0.001 mg/100g to 0.08 mg/100g, wherein the composition comprises one or more flavonoids selected from the group consisting of sinensetin, hesperetin, hesperidin, diosmin, isorhoifolin, heptamethoxyflavone and narirutin, and the total content of the one or more flavonoids is 63,000 ppb or more, 70,000 to 200,000 ppb, or 80,000 to 110,000 ppb. Preferably, a ratio of an amount of limonene to a total amount of one or more flavonoids selected from the group consisting of sinensetin, hesperetin, hesperidin, diosmin, isorhoifolin, heptamethoxyflavone and narirutin in the composition is 0.3 or less, 0.0001 to 0.3, 0.001 to 0.1, or 0.001 to 0.04.

In one embodiment, there is provided a beverage comprising a composition for food or beverage derived from a citrus fruit, wherein an amount of pectin in the beverage is less than 0.1 g/100g, 0.001 to 0.2 g/100g, or 0.001 to 0.05 g/100g, and an amount of limonene in the beverage is less than 0.4 mg/100g, 0.0001 to 0.2 mg/100g or 0.0001 to 0.05 mg/100g, wherein the beverage comprises one or more furanolactones selected from the group consisting of limonin 17-β-D-glucoside, limonin and nomilin, and the total content of the one or more furanolactones is 9,500 ppb or more, and wherein the beverage comprises one or more flavonoids selected from the group consisting of sinensetin, hesperetin, hesperidin, diosmin, isorhoifolin, heptamethoxyflavone and narirutin, and the total content of the one or more flavonoids is 6,300 ppb or more, and wherein a ratio of a content of nomilin to the total content of the one or more furanolactones is 17 wt% or less, 0.1 wt% to 10 wt% or 0.1 wt% to 5 wt%. Preferably, a ratio of an amount of limonene to a total amount of one or more furanolactones selected from the group consisting of limonin 17-β-D-glucoside, limonin and nomilin in the beverage is 0.2 or less, 0.0001 to 0.2, 0.001 to 0.1, or 0.001 to 0.04. Preferably, a ratio of an amount of limonene to a total amount of one or more flavonoids selected from the group consisting of sinensetin, hesperetin, hesperidin, diosmin, isorhoifolin, heptamethoxyflavone and narirutin in the beverage is 0.3 or less, 0.0001 to 0.3, 0.001 to 0.1, or 0.001 to 0.04.

In one embodiment, there is provided a beverage comprising a composition for food or beverage derived from a citrus fruit, wherein an amount of pectin in the beverage is less than 0.01 g/100g, 0.0001 to 0.02 g/100g, or 0.0001 to 0.005 g/100g, and an amount of limonene in the beverage is less than 0.04 mg/100g, 0.00001 to 0.02 mg/100g or 0.00001 to 0.005 mg/100g, wherein the beverage comprises one or more furanolactones selected from the group consisting of limonin 17-β-D-glucoside, limonin and nomilin, and the total content of the one or more furanolactones is 950 ppb or more, and wherein the beverage comprises one or more flavonoids selected from the group consisting of sinensetin, hesperetin, hesperidin, diosmin, isorhoifolin, heptamethoxyflavone and narirutin, and the total content of the one or more flavonoids is 630 ppb or more, and wherein a ratio of a content of nomilin to the total content of the one or more furanolactones is 17 wt% or less, 0.1 wt% to 10 wt% or 0.1 wt% to 5 wt%. Preferably, a ratio of an amount of limonene to a total amount of one or more furanolactones selected from the group consisting of limonin 17-β-D-glucoside, limonin and nomilin in the beverage is 0.2 or less, 0.0001 to 0.2, 0.001 to 0.1, or 0.001 to 0.04. Preferably, a ratio of an amount of limonene to a total amount of one or more flavonoids selected from the group consisting of sinensetin, hesperetin, hesperidin, diosmin, isorhoifolin, heptamethoxyflavone and narirutin in the beverage is 0.3 or less, 0.0001 to 0.3, 0.001 to 0.1, or 0.001 to 0.04.

In one embodiment, there is provided a beverage comprising a composition for food or beverage derived from a citrus fruit, wherein an amount of pectin in the beverage is less than 0.001 g/100g, 0.00001 to 0.002 g/100g, or 0.00001 to 0.0005 g/100g, and an amount of limonene in the beverage is less than 0.004 mg/100g, 0.000001 to 0.002 mg/100g or 0.000001 to 0.0005 mg/100g, wherein the beverage comprises one or more furanolactones selected from the group consisting of limonin 17-β-D-glucoside, limonin and nomilin, and the total content of the one or more furanolactones is 95 ppb or more, and wherein the beverage comprises one or more flavonoids selected from the group consisting of sinensetin, hesperetin, hesperidin, diosmin, isorhoifolin, heptamethoxyflavone and narirutin, and the total content of the one or more flavonoids is 63 ppb or more, and wherein a ratio of a content of nomilin to the total content of the one or more furanolactones is 17 wt% or less, 0.1 wt% to 10 wt% or 0.1 wt% to 5 wt%. Preferably, a ratio of an amount of limonene to a total amount of one or more furanolactones selected from the group consisting of limonin 17-β-D-glucoside, limonin and nomilin in the beverage is 0.2 or less, 0.0001 to 0.2, 0.001 to 0.1, or 0.001 to 0.04. Preferably, a ratio of an amount of limonene to a total amount of one or more flavonoids selected from the group consisting of sinensetin, hesperetin, hesperidin, diosmin, isorhoifolin, heptamethoxyflavone and narirutin in the beverage is 0.3 or less, 0.0001 to 0.3, 0.001 to 0.1, or 0.001 to 0.04.

In one embodiment, there is provided a beverage comprising a composition for food or beverage derived from a citrus fruit, wherein an amount of pectin in the beverage is less than 0.0002 g/100g, 0.000002 to 0.004 g/100g, or 0.000002 to 0.0001 g/100g, and an amount of limonene in the beverage is less than 0.0008 mg/100g, 0.0000002 to 0.0004 mg/100g or 0.0000002 to 0.0001 mg/100g, wherein the beverage comprises one or more furanolactones selected from the group consisting of limonin 17-β-D-glucoside, limonin and nomilin, and the total content of the one or more furanolactones is 10 ppb or more, and wherein the beverage comprises one or more flavonoids selected from the group consisting of sinensetin, hesperetin, hesperidin, diosmin, isorhoifolin, heptamethoxyflavone and narirutin, and the total content of the one or more flavonoids is 10 ppb or more, and wherein a ratio of a content of nomilin to the total content of the one or more furanolactones is 17 wt% or less, 0.1 wt% to 10 wt% or 0.1 wt% to 5 wt%. Preferably, a ratio of an amount of limonene to a total amount of one or more furanolactones selected from the group consisting of limonin 17-β-D-glucoside, limonin and nomilin in the beverage is 0.2 or less, 0.0001 to 0.2, 0.001 to 0.1, or 0.001 to 0.04. Preferably, a ratio of an amount of limonene to a total amount of one or more flavonoids selected from the group consisting of sinensetin, hesperetin, hesperidin, diosmin, isorhoifolin, heptamethoxyflavone and narirutin in the beverage is 0.3 or less, 0.0001 to 0.3, 0.001 to 0.1, or 0.001 to 0.04.

In one embodiment, there is provided a beverage comprising a composition for food or beverage derived from a citrus fruit, wherein an amount of soluble pectin in the beverage is less than 0.0002 g/100g, 0.000002 to 0.004 g/100g, or 0.000002 to 0.0001 g/100g, and an amount of limonene in the beverage is less than 0.0008 mg/100g, 0.0000002 to 0.0004 mg/100g or 0.0000002 to 0.0001 mg/100g, wherein the beverage comprises one or more furanolactones selected from the group consisting of limonin 17-β-D-glucoside, limonin and nomilin, and the total content of the one or more furanolactones is 10 ppb or more, and wherein the beverage comprises one or more flavonoids selected from the group consisting of sinensetin, hesperetin, hesperidin, diosmin, isorhoifolin, heptamethoxyflavone and narirutin, and the total content of the one or more flavonoids is 10 ppb or more, and wherein a ratio of a content of nomilin to the total content of the one or more furanolactones is 17 wt% or less, 0.1 wt% to 10 wt% or 0.1 wt% to 5 wt%. Preferably, a ratio of an amount of limonene to a total amount of one or more furanolactones selected from the group consisting of limonin 17-β-D-glucoside, limonin and nomilin in the beverage is 0.2 or less, 0.0001 to 0.2, 0.001 to 0.1, or 0.001 to 0.04. Preferably, a ratio of an amount of limonene to a total amount of one or more flavonoids selected from the group consisting of sinensetin, hesperetin, hesperidin, diosmin, isorhoifolin, heptamethoxyflavone and narirutin in the beverage is 0.3 or less, 0.0001 to 0.3, 0.001 to 0.1, or 0.001 to 0.04.

### Examples

### EXAMPLE 1 - Production of Citrus Extract and Beverage containing the Extract

### (1) Production of Citrus Extract from albedo (Sample 1A)

Albedo and flavedo of lemon fruits were separately obtained from lemon fruits, the juice of which had been extracted, using a citrus essential oil extractor (Polycitrus, manufactured by Fratelli Indelicato S.r.l.). The flavedo had a thickness of about 2 to 3 mm. The albedo was crushed into a size of about 0.5 mm using a grinder mill, and then water was added to prepare a slurry (concentration: 33 to 50%). Subsequently, a pectinase (Pectinex^{®} Ultra Mash produced by Novozyme A/S) was added to the slurry in an amount of 0.02 % based on the total weight of the slurry, and enzymatically treated under stirring at 45 to 55 °C for 2 hours. Thereafter, the solution was decanted and centrifuged to separate into solid and liquid phases, whereby a citrus extract (Sample 1A) was obtained as a supernatant. The citrus extract (Sample 1A) was sterilized by a heat treatment at 90 to 100 °C for 20 seconds or more. The heat treatment was conducted for deactivating the enzyme as well.

### (2) Production of Citrus Extract from both albedo and flavedo (Sample 1B)

Both of albedo and flavedo of lemon fruits were obtained together from lemon fruits, the juice of which had been extracted, using a citrus juice extractor (manufactured by John Bean Technologies Corporation). The albedo and flavedo were crushed into a size of about 0.5 mm using a grinder mill, and then water was added to prepare a slurry (concentration: 33 to 50%). The enzymatic treatment, decantation, centrifugation and heat sterilization were conducted in the same manner as those of Sample 1A to obtain a citrus extract (Sample 1B).

### (3) Production of Citrus Extract from albedo without enzymatic treatment (Sample 1C)

Albedo and flavedo of lemon fruits were separately obtained from lemon fruits, the juice of which had been extracted, using a citrus essential oil extractor (Polycitrus, manufactured by Fratelli Indelicato S.r.l.). The albedo was crushed into a size of about 0.5 mm using a grinder mill, and then water was added to prepare a slurry (concentration: 33 to 50%). Unlike the production of Sample 1A, the enzymatic treatment was not conducted. The slurry was subjected to a solid-liquid separation using a decanter and a centrifuge to obtain a citrus extract (Sample 1C) as a supernatant. Thereafter, the citrus extract was sterilized by a heat treatment at 90 to 100 °C for 20 seconds or more.

### (4) Production of Citrus Extract from flavedo without enzymatic treatment (Sample 1D)

Albedo and flavedo of lemon fruits were separately obtained from lemon fruits, the juice of which had been extracted, using a citrus essential oil extractor (Polycitrus, manufactured by Fratelli Indelicato S.r.l.). The flavedo was crushed into a size of about 0.5 mm using a grinder mill, and then water was added to prepare a slurry (concentration: 33 to 50%). Unlike the production of Sample 1A, the enzymatic treatment was not conducted. The slurry was subjected to a solid-liquid separation using a decanter and a centrifuge to obtain a citrus extract (Sample 1D) as a supernatant. Thereafter, the citrus extract was sterilized by a heat treatment at 90 to 100 °C for 20 seconds or more.

### (5) Production of beverage sample comprising citrus extract

A sample solution (citrus extract) obtained in Example 1 (Samples 1A, 1B, 1C or 1D) was diluted with mineral water (pH: about 7, "Minami-Alps Tennensui", still water, manufactured by Suntory Beverage & Food Limited) to prepare beverage samples with various concentrations. The compositions of the beverage samples will be described in Example 3.

### EXAMPLE 2 - Chemical Analysis of Citrus Extract and Beverage containing the Extract

### (1) Analysis of Pectin

A sample solution obtained from Example 1 was treated to hydrolyze pectins extracted to hot water (soluble pectins) and pectins extracted to diluted hydrochloric acid (insoluble pectins). Then, the total pectin amount was analyzed by measuring the amount of galacturonic acid using m-hydroxydiphenyl method (colorimetric method). The details of the analysis are as follows:

Pretreatment of soluble pectins and insoluble pectins
i) 10 g of a sample was placed into a glass centrifuging tube. Water and 99.5% ethanol were added thereto and the glass centrifuging tube was heated at 80°C for one hour.
ii) Then, supernatant was obtained from the glass centrifuging tube, and filtered by glass fiber filter paper. The residue on the glass fiber filter paper was washed several times to remove low molecular weight saccharides. The glass fiber filter paper was thereafter placed back to the glass centrifuging tube, and heated for one hour in a boiling bath after addition of water. Then, the supernatant was filtered by a glass fiber filter paper.

### Quantitative determination of soluble pectins

The filtrate obtained in step ii) above was cooled. Then the filtrated was diluted to a specific volume to prepare a test liquid for determining soluble pectins. The resulting galacturonic acid amount was quantified by the m-hydroxydiphenyl method to give galacturonic acid amount (A). The amount of soluble pectins was calculated by the following formula (correction factor, 0.91): Amount of soluble pectin = amount of galacturonic acid (A) × 0.91.

### Quantitative determination of insoluble pectins

The glass fiber filter paper obtained in step ii) above was placed back to the glass centrifuging tube, 0.05 mol/L hydrochloric acid was added thereto, and heated for one hour in a boiling bath. After cooling, the sample was diluted to adjust its volume to the prescribed level, and filtered by a filter paper to prepare a test liquid for determining insoluble pectins. The resulting galacturonic acid amount was quantified by the m-hydroxydiphenyl method to give galacturonic acid amount (B). The amount of insoluble pectins was calculated by the following formula (correction factor, 0.91):
Amount of insoluble pectin = amount of galacturonic acid (B) × 0.91.

### Total pectin amount

Total pectin amount was calculated by adding the amounts of soluble and insoluble pectins obtained above.

### (2) Analysis of DL-limonene

10 mL of a sample solution obtained from Example 1 or 10 mL of a diluted solution which had been prepared by diluting the sample solution with distilled water for high-performance liquid chromatography (HPLC) was placed in a glass screw vial with a volume of 20 mL, followed by adsorbing a component with Twister (manufactured by GERSTEL) at room temperature for 30 minutes. The degree of dilution of a sample solution was adjusted in order to obtain clearer peaks in GC/MS. Then, the resultant solution was analyzed by GC/MS, and quantified by standard addition method. The details of the analysis are as follows:
Equipment: Temperature-programmed type inlet (CIS4, manufactured by Gerstel), Thermal Desorption unit (TDU2, manufactured by Gerstel); GC System (7890B, manufactured by Agilent Technologies), Mass Selective Detector (5977B, manufactured by Agilent Technologies)
LTM column: DB-WAX UI, 30m × 0.25mm; 0.25 µm, manufactured by Agilent Technologies) TDU: 40 °C (0.5 min) - (720 °C/min) - 250 °C (5 min)
CIS4: -80 °C (1.5 min) - (12 °C/sec) - 270°C (20 min)
Inlet pressure: 359.02kPa
Carrier gas: He
Column temperature: 40 °C (3 min) - (5 °C/min) - 250 °C (5 min)
MSD: SCAN mode, m/z 29-300, EI
Quantified ion: DL-limonene (m/z 93)

### (3) Analysis of galacturonic acid

A sample solution obtained from Example 1 was analyzed by HPLC to quantify galacturonic acid. Water was added to 1 g of a sample to adjust its volume to the prescribed level. Then the sample was filtered with a membrane filter and diluted with water. The diluted sample was subjected to a high-performance liquid chromatography (HPLC) analysis (ICS-6000 (manufactured by Thermo Fisher Scientific).

The amounts of pectin, limonene and galacturonic acid of Samples 1A to 1C are summarized in Table 1 below. Also, based on the data in these tables, the theoretical amounts of pectin, limonene and galacturonic acid in beverages containing 0.02 wt% of the extracts obtained in Example 1 were calculated and summarized in Table 2. These beverage samples were prepared as described in (5) in Example 1. For example, "Sample 1A beverage" in Table 2 contains 0.02 wt% of the extract obtained in (1) in Example 1, i.e. Sample 1A, and a mineral water (pH: about 7, "Minami-Alps Tennensui", still water, manufactured by Suntory Beverage & Food Limited). No reliable data of the pectin content in Sample 1C was obtained.

**Table 1**

| | Pectin | Limonene | Galacturonic acid |
|---|---|---|---|
| **Sample 1A** | 0.13 g/100g (soluble: 0.13 g/100g, insoluble: not detected) | 0.62 ppm (0.062 mg/100g) | 3000 ppm (0.3 g/100g) |
| **Sample 1B** | 0.83 g/100g (soluble: 0.81 g/100g, insoluble: 0.02 g/100g) | 40.00 ppm (4.00 mg/100g) | 2000 ppm (0.2 g/100g) |
| **Sample 1C** | No data | 140.36 ppm (14.04 mg/100g) | <200 ppm (<0.02 g/100g) |
| **Sample 1D** | 0.20 g/100g (soluble: 0.20 g/100g, insoluble: not detected) | 3483.16 ppm (348.32 mg/100g) | <200 ppm (<0.02 g/100g) |

**Table 2**

| | Pectin | Limonene | Galacturonic acid |
|---|---|---|---|
| **Sample 1A beverage** | 0.00003 g/100g | 0.124 ppb (0.0124 µg/100g) | 0.6 ppm (0.06 mg/100g) |
| **Sample 1B beverage** | 0.00017 g/100g | 8 ppb (0.8 µg/100g) | 0.4 ppm (0.04 mg/100g) |
| **Sample 1C beverage** | No data | 28.072 ppb (2.81 µg/100g) | <0.04 ppm (<0.004 mg/100g) |
| **Sample 1D beverage** | 0.00004 g/100g | 696.632 ppb (69.7 µg/100g) | <0.04 ppm (<0.004 mµ/100g) |

### (4) Analysis of Flavonoids and Furanolactones

A sample solution obtained in Example 1 was diluted with distilled water for high-performance liquid chromatography. Ethanol for high-performance liquid chromatography was added to the diluted solution so that the percentage of ethanol in the solution becomes 50 wt%, and thereafter the solution was mixed. 2 mL of the resultant solution was placed in a centrifugation filtration filter (Ultrafree-CL, GV 0.22 µm, PVDF, manufactured by Merk Millipore) and was centrifuged at 3,000 rpm, at 4 °C for 15 minutes or more to obtain a filtrate as an analysis sample. LC-MS analysis was conducted for the analysis sample and quantified by absolute calibration method. The details of the analysis are as follows:
High-performance liquid chromatograph: 1290 Infinity II (manufactured by Agilent Technologies) Column: CORTECS UPLC T3 1.6 µm, 2.1x150mm (manufactured by Warters)
Column temperature: 40 °C
Mobile phase: (A) 0.1% formic acid solution for LC/MS, (B) acetonitrile for LC/MS
Mobile phase gradient condition: 5% B (0-1min) → 100% B (29.5min) → 100% B (31.5min), waiting time for equilibrium: 3.5min
Flow rate: 0.4mL/min
Injection volume: 2µL
Mass spectrometer: Q Exactive Focus LC-MS/MS system (manufactured by Thermo Fisher Scientific)
Ionization method: HESI (Heated Electrospray Ionization)
Conditions of ionization part: Sheath gas flow rate: 50; Aux gas flow rate: 10; Sweep gas flow rate: 0; Spray voltage pos: 3.50/neg, 2.50 |kV|; Capillary temperature: 350 °C; S-Lens RF level: 50.0; Aux gas heater temperature: 300 °C
Conditions of mass spectroscopy part: Scan analysis by Orbitrap, Duration time: 32 min; Polatiry swithcing, Resolution: 70000; AGC target: 3e6; scanning range: m/z 100~1500
Divert valve: waste fluid line (0-1.8 min), MS line (1.8-31.99 min)

The amounts of flavonoids and furanolactones measured by the above analysis are summarized in Tables 3-1 and 3-2. Based on the data in these tables, the theoretical amounts of these flavonoids and furanolactones in beverages containing 0.02 wt% of the extracts obtained in Example 1 were calculated and summarized in Tables 4-1 and 4-2. These beverage samples were prepared as described in (5) in Example 1. For example, "Sample 1A beverage" in Tables 3-1 and 3-2 contains 0.02 wt% of the extract obtained in (1) in Example 1, i.e. Sample 1A, and a mineral water (pH: about 7, "Minami-Alps Tennensui", still water, manufactured by Suntory Beverage & Food Limited).

**Table 3-1**

| | Flavonoids [µg/kg (ppb)] | | | | | | | Flavonoids Total [µg/kg (ppb)] |
|---|---|---|---|---|---|---|---|---|
| | Sinensetin | Hesperetin | Hesperidin | Diosmin | Isorhoifolin | Heptamethoxyflavone | Narirutin | |
| **Sample 1A** | <2 | 50 | 80,906 | 320 | 1,900 | <6 | 11,202 | 94,378 |
| **Sample 1B** | 27 | 70 | 105,294 | 2,570 | 4,100 | 13 | 7,568 | 119,642 |
| **Sample 1C** | <2 | <20 | 41,480 | 1,040 | 930 | <6 | 6,334 | 49,784 |
| **Sample 1D** | 10 | <20 | 50,747 | 460 | 3,500 | <6 | 7,326 | 62,043 |

Note: The values with inequality signs "<" means that the content of the flavonoid is below its detection limit. Therefore, when calculating the content of "flavonoids total", these values were treated as zero.

**Table 3-2**

| | Furanolactones [µg/kg (ppb)] | | | Furanolactones Total [µg/kg (ppb)] | Nomilin/Furanolactones Total [%] |
|---|---|---|---|---|---|
| | Limonin 17-β-D-glucoside | Limonin | Nomilin | | |
| **Sample 1A** | 86,415 | 46,231 | 4,642 | 137,288 | 3.4 |
| **Sample 1B** | 77,659 | 38,783 | 24,921 | 141,363 | 17.6 |
| **Sample 1C** | 63,044 | 19,958 | 1,497 | 84,499 | 1.8 |
| **Sample 1D** | 48,677 | 29,174 | 16,245 | 94,096 | 17.3 |

**Table 4-1**

| | Furanolactones [µg/kg (ppb)] | | | | | | | Furanolactones Total [µg/kg (ppb)] |
|---|---|---|---|---|---|---|---|---|
| | Sinensetin | Hesperetin | Hesperidin | Diosmin | Isorhoifolin | Heptamethoxyflavone | Narirutin | |
| Sample 1A beverage | <0.0004 | 0.01 | 16.2 | 0.1 | 0.4 | <0.001 | 2.2 | 18.9 |
| Sample 1B beverage | 0.005 | 0.01 | 21.1 | 0.5 | 0.8 | 0.003 | 1.5 | 23.9 |
| Sample 1C beverage | <0.0004 | <0.004 | 8.3 | 0.2 | 0.2 | <0.001 | 1.3 | 10.0 |
| Sample 1D beverage | 0.002 | <0.004 | 10.1 | 0.1 | 0.7 | <0.001 | 1.5 | 12.4 |

Note: The values with inequality signs "<" means that the content of the flavonoid is below its detection limit. Therefore, when calculating the content of "flavonoids total", these values were treated as zero.

**Table 4-2**

| | Furanolactones [µg/kg (ppb)] | | | Furanolactones Total [µg/kg (ppb)] | Nomilin/Furanolactones Total [%] |
|---|---|---|---|---|---|
| | Limonin 17-β-D-glucoside | Limonin | Nomilin | | |
| Sample 1A beverage | 17.3 | 9.2 | 0.9 | 27.5 | 3.4 |
| Sample 1B beverage | 15.5 | 7.8 | 5.0 | 28.3 | 17.6 |
| Sample 1C beverage | 12.6 | 4.0 | 0.3 | 16.9 | 1.8 |
| Sample 1D beverage | 9.7 | 5.8 | 3.2 | 18.8 | 17.3 |

### EXAMPLE 3 - Evaluation of Citrus Extract and Beverage containing the Extract

### (1) Evaluation of Flavor

The extract samples obtained in (1) in Example 1 and beverage samples obtained in (5) in Example 1 were subjected to the sensory test. Samples A-0, A-1, A-2, A-3, A-4, and A-5 contained the extract (Sample 1A) in an amount of 0 wt%, 0.02 wt %, 0.10 wt %, 1 wt %, 10 wt % and 100 wt %, respectively. In other words, Sample A-0 is a reference sample consisting of water, while Sample A-5 equals to Sample 1A. Persons trained for sensory evaluation of beverages (3 members) were panelists to perform the evaluation based on the following evaluation criteria:
(Flavor evaluation criteria)
1: No flavor felt
2: Good flavor felt
3: Superior flavor felt

In the evaluation, the flavor means lemon-like fruitiness and freshness. Results thus obtained are shown in Table 5. The evaluation values in the table are the averages of the scores rated by the three panelists. Samples with the average value of 2 or more were rated as "good".

**Table 5**

| Samples | A-0 | A-1 | A-2 | A-3 | A-4 | A-5 |
|---|---|---|---|---|---|---|
| Concentration of extract | 0 wt% | 0.02 wt % | 0.10 wt % | 1 wt % | 10 wt % | 100 wt % |
| Pectin (g/100g) | 0 | 0.00003 | 0.00013 | 0.0013 | 0.013 | 0.13 |
| Limonene (ppm) | 0 | 0.00012 | 0.00062 | 0.0062 | 0.062 | 0.62 |
| Limonene (mg/100g) | 0 | 0.000012 | 0.000062 | 0.00062 | 0.0062 | 0.062 |
| Galacturonic acid (ppm) | 0 | 0.6 | 3 | 30 | 300 | 3,000 |
| Galacturonic acid (mg/100g) | 0 | 0.06 | 0.3 | 3 | 30 | 300 |
| Flavonoids (ppb) | 0 | 19 | 94 | 944 | 9,438 | 94,378 |
| Furanolactones (ppb) | 0 | 27 | 137 | 1,373 | 13,729 | 137,288 |
| Average value | 1 | 2 | 2 | 3 | 3 | 3 |

### (2) Evaluation of photostability

In order to evaluate the photostability of the beverage samples obtained in (5) in Example 1, the samples were filled in transparent bottles and were radiated for 3 hours with a light (UV) with a radiation intensity of 150 Wh/m². The samples were subjected to the sensory test. Samples B-0, B-1, B-2, B-3 and B-4 contained the extract (Sample 1A) in an amount of 0 wt%, 0.02 wt %, 0.10 wt %, 1 wt % and 10 wt, respectively. Samples C-0, C-1, C-2, C-3 and C-4 contained the extract (Sample 1B) in an amount of 0 wt%, 0.02 wt %, 0.10 wt %, 1 wt % and 10 wt, respectively. Samples D-0, D-1, D-2, D-3 and D-4 contained the extract (Sample 1D) in an amount of 0 wt%, 0.02 wt %, 0.10 wt %, 1 wt % and 10 wt, respectively. Samples B-0, C-0 and D-0 are reference samples. Persons trained for sensory evaluation of beverages (3 members) were panelists to perform the evaluation based on the following evaluation criteria:
(Photostability evaluation criteria)
1: Significant smell due to photodecomposition felt
2: Smell due to photodecomposition felt
3: No smell due to photodecomposition felt

Results thus obtained are shown in Tables 6 to 8. The evaluation values in the table are the averages of the scores rated by the three panelists. Samples with the average value of 3 or more were rated as "good".

**Table 6: Samples based on Sample 1A**

| Samples | B-0 | B-1 | B-2 | B-3 | B-4 |
|---|---|---|---|---|---|
| Concentration of extract | 0 wt% | 0.02 wt% | 0.10 wt% | 1 wt% | 10 wt% |
| Pectin (g/100g) | 0 | 0.00003 | 0.00013 | 0.0013 | 0.013 |
| Limonene (ppm) | 0 | 0.00012 | 0.00062 | 0.0062 | 0.062 |
| Limonene (mg/100g) | 0 | 0.000012 | 0.000062 | 0.00062 | 0.0062 |
| Galacturonic acid (ppm) | 0 | 0.6 | 3 | 30 | 300 |
| Galacturonic acid (mg/100g) | 0 | 0.06 | 0.3 | 3 | 30 |
| Flavonoids (ppb) | 0 | 19 | 94 | 944 | 9,438 |
| Furanolactones (ppb) | 0 | 27 | 137 | 1,373 | 13,729 |
| Average value | 3 | 3 | 3 | 3 | 3 |

**Table 7: Samples based on Sample 1B**

| Samples | C-0 | C-1 | C-2 | C-3 | C-4 |
|---|---|---|---|---|---|
| Concentration of extract | 0 wt% | 0.02 wt% | 0.10 wt% | 1 wt% | 10 wt% |
| Pectin (g/100g) | 0 | 0.00017 | 0.00083 | 0.0083 | 0.083 |
| Limonene (ppm) | 0 | 0.008 | 0.04 | 0.4 | 4 |
| Limonene (mg/100g) | 0 | 0.0008 | 0.004 | 0.04 | 0.4 |
| Galacturonic acid (ppm) | 0 | 0.4 | 2 | 20 | 200 |
| Galacturonic acid (mg/100g)) | 0 | 0.04 | 0.2 | 2 | 20 |
| Flavonoids (ppb) | 0 | 24 | 120 | 1,196 | 11,964 |
| Furanolactones (ppb) | 0 | 28 | 141 | 1,414 | 14,136 |
| Average value | 3 | 3 | 2 | 1 | 1 |

**Table 8: Samples based on Sample 1D**

| Samples | D-0 | D-1 | D-2 | D-3 | D-4 |
|---|---|---|---|---|---|
| Concentration of extract | 0 wt% | 0.02 wt% | 0.10 wt% | 1 wt% | 10 wt% |
| Pectin (g/100g) | 0 | 0.00004 | 0.0002 | 0.002 | 0.02 |
| Limonene (ppm) | 0 | 0.7 | 3.5 | 35 | 348 |
| Limonene (mg/100g) | 0 | 0.07 | 0.35 | 3.5 | 35 |
| Galacturonic acid (ppm) | 0 | <0.04 | <0.2 | <2 | <20 |
| Galacturonic acid (mg/100g)) | 0 | <0.004 | <0.02 | <0.2 | <2 |
| Flavonoids (ppb) | 0 | 12 | 62 | 620 | 6,204 |
| Furanolactones (ppb) | 0 | 19 | 94 | 941 | 9,410 |
| Average value | 3 | 2 | 2 | 1 | 1 |

| | | | | | |
|---|---|---|---|---|---|
| Note: The values with inequality signs "<" means that the content of the flavonoid is below its detection limit. | | | | | |

### (3) Evaluation of Appearance

The beverage samples obtained in (5) in Example 1 were subjected to an appearance stability test. The beverage samples used for this evaluation are samples based on Samples 1A and 1C, each of which contained 50 wt% of the citrus extracts (Samples 1A and 1C), respectively. Sample A-6 is the sample based on Sample 1A, and Sample E-6 is the sample based on Sample 1C. The samples were stored stationarily at 5 °C or 37 °C from Day 0 to Day 3. Day 0 is the day that each sample was prepared. Presence and absence of precipitation were evaluated visually.

**Table 9: Samples stored stationarily at 5 °C**

| | Day0 | Day1 | Day2 | Day3 |
|---|---|---|---|---|
| A-6 | No precipitation | No precipitation | No precipitation | No precipitation |
| E-6 | No precipitation | Precipitated | Precipitated | Precipitated |

**Table 10: Samples stored stationarily at 37 °C**

| | Day0 | Day1 | Day2 | Day3 |
|---|---|---|---|---|
| A-6 | No precipitation | No precipitation | No precipitation | No precipitation |
| E-6 | No precipitation | Precipitated | Precipitated | Precipitated |

### Reference Signs List

1: peel, 3: flavedo, 5: albedo, 7: a segment with juice vesicles, 9: a seed, 10: a citrus fruit.

## Claims

1. A composition for a food or beverage derived from a citrus fruit, wherein an amount of pectin in the composition is less than 1 g/100g and an amount of limonene in the composition is less than 4 mg/100g.

2. The composition according to Claim 1, wherein the composition comprises one or more furanolactones selected from the group consisting of limonin 17-β-D-glucoside, limonin and nomilin, and the total content of the one or more furanolactones is 95,000 ppb or more.

3. The composition according to Claim 2, wherein a ratio of a content of nomilin to the total content of the one or more furanolactones is 17 wt% or less.

4. The composition according to any one of Claims 1 to 3, wherein the composition comprises one or more flavonoids selected from the group consisting of sinensetin, hesperetin, hesperidin, diosmin, isorhoifolin, heptamethoxyflavone and narirutin, and the total content of the one or more flavonoids is 63,000 ppb or more.

5. The composition according to any one of Claims 1 to 4, wherein the composition comprises galacturonic acid in an amount of 0.02 g/100g or more.

6. The composition according to any one of Claims 1 to 5, wherein the composition comprises, or consists essentially of, an extract of albedo of a citrus fruit or a pectinase-treated extract of albedo of a citrus fruit.

7. A beverage comprising a composition for food or beverage derived from a citrus fruit, wherein an amount of pectin in the beverage is less than 0.5 g/100g and an amount of limonene in the beverage is less than 2 mg/100g.

8. The beverage according to Claim 7, wherein the beverage comprises one or more furanolactones selected from the group consisting of limonin 17-β-D-glucoside, limonin and nomilin, and the total content of the one or more furanolactones is 10 ppb or more.

9. The beverage according to Claim 8, wherein a ratio of a content of nomilin to the total content of the one or more furanolactones is 17 wt% or less.

10. The beverage according to any one of Claims 7 to 9, wherein the beverage comprises one or more flavonoids selected from the group consisting of sinensetin, hesperetin, hesperidin, diosmin, isorhoifolin, heptamethoxyflavone and narirutin, and the total content of the one or more flavonoids is 10 ppb or more.

11. The beverage according to any one of Claims 7 to 10, wherein the beverage comprises galacturonic acid in an amount of 0.004 mg/100g or more.

12. The beverage according to any one of Claims 7 to 11, wherein the composition comprises, or consists essentially of, an extract of albedo of a citrus fruit or a pectinase-treated extract of albedo of a citrus fruit.

13. The beverage according to any one of Claims 7 to 11, wherein a ratio of an amount of limonene to a total amount of one or more furanolactones selected from the group consisting of limonin 17-β-D-glucoside, limonin and nomilin in the beverage is 0.2 or less, or a ratio of an amount of limonene to a total amount of one or more flavonoids selected from the group consisting of sinensetin, hesperetin, hesperidin, diosmin, isorhoifolin, heptamethoxyflavone and narirutin in the beverage is 0.3 or less.

14. A method of producing a composition for food or beverage derived from a citrus fruit, comprising:
separating albedo from the citrus fruit;
extracting the albedo with a solvent to obtain an albedo extract; and
adding pectinase to the albedo extract.

15. The method according to Claim 14, further comprising processing the albedo extract at 30 to 60 °C for 0.5 to 24 hours after the addition of pectinase to the albedo extract.
